# EUROPÄISCHE PATENTSCHRIFT

(11) **EP 2 292 471 B1**
(45) Veröffentlichungstag und Bekanntmachung des Hinweises auf die Patenterteilung: **27.03.2013**
(21) Anmeldenummer: 10009113.1
(22) Anmeldetag: 02.09.2010
(51) Int. Cl.: B60R 9/10, F16B 2/06

(54) **Befestigungseinrichtung mit einer Schelle**
Attachment device with a clamp
Dispositif de fixation doté d'un étrier

(30) Priorität: 02.09.2009 DE 102009039820
(43) Veröffentlichungstag der Anmeldung: 09.03.2011
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 33449 Langenberg (DE); Recker, Andreas, 33602 Bielefeld (DE)
(74) Vertreter: Bregenzer, Michael

(56) Entgegenhaltungen:
- EP-A2- 1 233 192
- DE-A1- 4 304 239
- FR-A- 1 016 817

## Beschreibung

Die Erfindung betrifft eine Befestigungseinrichtung für einen Kraftfahrzeug-Träger, insbesondere einen Fahrradträger, gemäß dem Oberbegriff des Anspruchs 1.

Eine derartige Befestigungseinrichtung geht aus FR 1016817 A hervor.

Mit einer solchen Befestigungseinrichtung können beispielsweise Fahrräder an einem Fahrradträger befestigt werden. Der Kraftfahrzeug-Träger ist beispielsweise am Heck des Kraftfahrzeuges in der Art einer Schublade oder an einer Anhängekupplung befestigt oder auch auf dem Dach. Die Schelle ist um beispielsweise ein Trägerrohr, einem Bügel oder dergleichen gespannt, an dem wiederum mittels der Befestigungseinrichtung ein zu transportierender Gegenstand befestigbar ist, beispielsweise ein Fahrrad mittels einer Klemme, die von der Befestigungseinrichtung gehalten wird.

Insbesondere wenn der Kraftfahrzeug-Träger bereits mit Gegenständen bestückt ist, sind die Platzverhältnisse sehr beengt. Häufig können Kraftfahrzeug-Träger, wenn sie nicht in Gebrauch sind, zumindest teilweise zusammengeklappt werden, damit sie ein geringeres Baumaß einnehmen. In beiden Fällen sollte die Befestigungseinrichtung möglichst kompakt sein.

Weiterhin ist eine Forderung an eine Befestigungseinrichtung, dass sie eine hohe Tragkraft und Stabilität aufweist. Somit können die beim Fahrbetrieb des Kraftfahrzeug-Trägers auftretenden Kräfte von der Befestigungseinrichtung aufgenommen werden. Es ist vorteilhaft, wenn eine Befestigungseinrichtung der eingangs genannten Art bequem bedienbar ist.

Es ist daher die Aufgabe der vorliegenden Erfindung, eine kompakte und belastbare Befestigungseinrichtung bereitzustellen.

Zur Lösung dieser Aufgabe ist eine Befestigungseinrichtung gemäß der technischen Lehre des Anspruchs 1 vorgesehen.

Die Schelle weist eine optimale Krafteinleitung auf. Anders als bei üblichen Schellen, bei denen die Spannkraft seitlich neben dem Trägerkörper, beispielsweise einem Rohr, Bügel oder dergleichen, in die Schelle eingeleitet wird, so dass beispielsweise zwischen einer Gewindestange, die als Spannkörper der bislang üblichen Schelle dient, und dem Innenquerschnitt, insbesondere dem Zentralbereich des Innenquerschnitts, der Schelle bzw. dem Schellenzentrum ein Hebel entsteht. Somit ist also keine optimale Krafteinleitung bzw. Kraftübertragung zwischen dem Trägerkörper und der Schelle bzw. der an der Schelle befestigten weiteren Komponenten der Befestigungseinrichtung beim Stand der Technik möglich.

Bei einer Schelle der erfindungsgemäßen Befestigungseinrichtung hingegen ist der Kraftfluss optimal, da beispielsweise die Gewindestange, die als Spannkörper dient, sozusagen vom Innenquerschnitt, insbesondere dessen Zentralbereich, der Schelle oder vom Zentrum der Schelle absteht. Dadurch ist weiterhin eine kompakte Bauart erzielt, da der Spannkörper, zum Beispiel die Gewindestange, unmittelbar vom Trägerkörper absteht und nicht seitlich daneben angeordnet ist, wie es im Stand der Technik der Fall ist.

Die mindestens eine Schrägfläche ist beispielsweise eine Keilfläche. Man könnte also auch sagen, dass zwischen dem Spannkörper und dem Ringkörper ein Keilgetriebe oder ein Schrägflächengetriebe vorgesehen ist.

Prinzipiell ist es möglich, Schrägflächen nur an einem oder beiden der Ringkörper-Spannenden oder an einem oder beiden der dem jeweiligen Ringkörper-Spannende zugeordneten Spannbereiche des Spannkörpers vorzusehen. Besonders bevorzugt ist es jedoch, wenn an beiden Komponenten, d.h. am jeweiligen Ringkörper-Spannende als auch am Spannkörper bzw. dessen Spannbereich jeweils eine Schrägfläche vorhanden ist. Die Schrägflächen können dann unmittelbar aufeinander angeordnet sein. Dabei ist festzuhalten, dass die jeweiligen Schrägflächen zweckmäßigerweise dieselbe Neigung aufweisen, aber auch unterschiedliche Neigungen haben können.

Vorzugsweise sind Schrägflächen an einander entgegengesetzten Seiten der Ringkörper-Spannenden und/oder an einander zugewandten Seiten des Spannkörpers vorgesehen.

Bevorzugt sind die Schrägflächen Planflächen bzw. ebene Flächen. Es ist aber auch möglich, dass zueinander winkelige oder gekrümmte, insbesondere zylindrische, Schrägflächen, vorgesehen sind. Die mindestens eine Schrägfläche kann auch gestuft und/oder gezahnt sein.

Die Schrägfläche verläuft beispielsweise tangential vom jeweiligen Ringkörper-Spannende weg.

Bevorzugt ist es, wenn die Schrägfläche(n) eine nicht selbsthemmende Neigung hat/haben. Beispielsweise kann die jeweilige Schrägfläche eine Neigung im Bereich von 20 bis 60 Grad, vorzugsweise etwa 30 Grad, schräg zur Spannbewegungsbahn aufweisen.

Nun könnte sich der Spannkörper prinzipiell zwar an seiner Umgebung abstützen, beispielsweise einer beliebigen Komponente des Kraftfahrzeug-Trägers. Bevorzugt ist jedoch eine sich selbst tragende und stützende Konstruktion.

Die Befestigungseinrichtung weist einen Zuganker auf, der an einer Zuganker-Halterung des Ringkörpers zugfest befestigbar oder befestigt ist. Der Spannkörper stützt sich an den Zuganker zumindest in seiner Spannstellung direkt oder indirekt ab. Eine direkte Abstützung könnte beispielsweise dadurch geschaffen sein, dass an dem Zuganker ein Gewinde vorhanden ist, das mit einem Gewinde des Spannkörpers kämmt. Durch eine Drehung des Zugankers oder des Spannkörpers ist es dann möglich, den Spannkörper entlang des Gewindeabschnitts zu verstellen, nämlich zwischen seiner Lösestellung und seiner Spannstellung in Bezug auf die Schelle.

Zur indirekten Abstützung könnte auch ein Betätigungselement an dem Zuganker vorgesehen sein, das sich seinerseits am Zuganker abstützt, beispielsweise eine Spannmutter.

Weiterhin ist es denkbar, dass zwischen dem Betätigungskörper bzw. der Spannmutter und dem Spannkörper weitere Komponenten angeordnet sind, beispielsweise die eingangs genannte Klammer und/oder ein Distanzstück.

Nun wäre es prinzipiell möglich, dass sich der Zuganker neben den Ringkörper-Spannenden am Ringkörper zugfest abstützt.

Beispielsweise könnten die Ringkörper-Spannenden zwischen zwei Zuganker-Halterungen, die am Ringkörper vorgesehen sind, angeordnet sein.

Bevorzugt ist es jedoch, wenn mindestens eines, vorzugsweise beide, der Ringkörper-Spannenden zumindest ein Halterungsteil der Zuganker-Halterung aufweist. Bevorzugt ist es allerdings, wenn sich der Zuganker an beiden Ringkörper-Spannenden abstützt bzw. von beiden Ringkörper-Spannenden zugfest gehalten wird.

Die Erfindung sieht vor, dass der Zuganker insgesamt lösbar von der Schelle ist. Mithin sind also an dem Ringkörper zwei Ringkörper- oder Spannenden mit einer Zuganker-Halterung vorhanden, die mit dem Zuganker, beispielsweise einem Vorsprung desselben oder einer Aufnahme an diesem, verbindbar sind. Der Zuganker ist also lösbar mit dem Ringkörper verbindbar.

Eine bevorzugte Ausführungsform sieht vor, dass an den Ringkörper-Spannenden und dem Zuganker eine Steckverbindung vorgesehen ist dergestalt, dass beispielsweise an den Ringkörper-Spannenden eine Steckaufnahme, am Zuganker ein oder mehrere Steckvorsprünge vorgesehen sind oder umgekehrt, d.h. beispielsweise ein Steckvorsprung an einem Ringkörper-Spannende, der zum Eingriff in eine Steckaufnahme am Zuganker ausgestaltet ist. Somit ist es also möglich, durch einfaches Anstecken des Zugankers an den Ringkörper eine Verbindung zwischen den beiden Bauteilen zu schaffen.

Es ist auch möglich, dass der Zuganker an der Schelle oder dem Ringkörper mittels einer Schraubverbindung befestigt wird.

Es versteht sich, dass an einem oder beiden Ringkörper-Spannenden Verbindungsmittel zur Verbindung mit dem Zuganker vorgesehen sein können.

Damit ist es auch möglich, den Zuganker auf einfache Weise vom Ringkörper zu entfernen oder auch wieder an diesem anzubringen, beispielsweise wenn dies die Montage eines zu befestigenden Gegenstandes, z.B. eines Fahrrades, am Kraftfahrzeug-Träger erfordert. Auch ein Umbau des Kraftfahrzeug-Trägers ist leicht möglich, da die Verbindung zwischen Zuganker und Ringkörper leicht lösbar ist. Mithin ist also eine lösbare Verbindung zwischen dem Zuganker und beiden Ringkörper-Spannenden bevorzugt.

Die mindestens eine Zuganker-Halterung des Ringkörpers und ein Zugwiderlagerelement des Zugankers umfassen eine Zugankeraufnahme und mindestens einen Zugvorsprung, der in die Zuganker-Aufnahme eingreift. Der Zugvorsprung ist beispielsweise am Zuganker, die Zuganker-Aufnahme am Ringkörper vorgesehen. Es ist aber auch die umgekehrte Anordnung (Aufnahme am Ringkörper, Vorsprung am Zuganker, Vorsprung am Ringkörper) möglich.

Zwischen der Zuganker-Aufnahme und dem Zugvorsprung ist zumindest in der Lösestellung des Spannkörpers ein Spiel vorhanden, das in der Spannstellung verkleinert oder gar nicht mehr vorhanden ist. Dadurch ist es möglich, dass sich beispielsweise das jeweilige Ringkörper-Spannende in Richtung der Bewegungsbahn bewegen kann. Es versteht sich, dass anstelle eines entsprechenden Spiels auch beispielsweise eine elastische Eigenschaft des Ringkörpers, der vorzugsweise aus Kunststoff besteht, ausreichen kann, um die Schließbewegung oder Spannbewegung des jeweiligen Ringkörper-Spannendes zuzulassen.

An einem Zugvorsprung, der in eine Zuganker-Aufnahme eingreift, sind mindestens eine, vorzugsweise mehrere Formschlusskontur(en) vorhanden, die formschlüssig ineinander greifen. Bei diesen Formschlusskonturen, die vorzugsweise quer zur Zugrichtung oder quer zur Spannbewegungsbahn orientiert und/oder wirksam sind, handelt es sich beispielsweise um Vorsprünge, Ausnehmungen oder dergleichen. Mithin steht also beispielsweise vor die Zuganker-Aufnahme ein Formschluss-Vorsprung vor, der in eine Formschluss-Aufnahme am Zugvorsprung eingreift. Auch das Umgekehrte ist möglich.

Wie bereits erwähnt, umfassen die Ringkörper-Spannenden vorteilhaft mindestens einen Bestandteil der Zuganker-Halterung. Bevorzugt sind dabei einander zugewandt offene Zuganker-Aufnahmen, in die aneinander entgegengesetzt an dem Zugwiderlagerelement des Zugankers angeordnete Zugvorsprünge eingreifen. Beispielsweise ist am Ende des Zugankers als Zugwiderlagerelement eine Art Platte oder eine Stauchung vorgesehen.

Der Zuganker ist zweckmäßigerweise an dem Ringkörper verdrehgesichert gehaltert. Dies erleichtert beispielsweise das Aufschrauben eines Betätigungsgliedes auf den Zuganker, der vorzugsweise einen Gewindeabschnitt aufweist.

Der Zuganker durchdringt zweckmäßigerweise den Spannkörper. Dadurch ist eine optimale Krafteinleitung und Abstützung des Spannkörpers am Zuganker möglich.

Bevorzugt ist es, wenn der Spannkörper an dem Zuganker geführt ist. Eine vorteilhafte Maßnahme sieht vor, dass eine Längsachse des insbesondere stabförmigen oder geradlinig verlaufenden Zugankers die Spannbewegung definiert. An dieser Stelle sei bemerkt, dass der Zuganker nicht unbedingt einen geraden Verlauf aufweisen muss, sondern auch durchaus gekrümmt sein kann.

Der Zuganker ist zweckmäßigerweise zumindest abschnittsweise biegesteif. Vorzugsweise ist der Zuganker an einem oder mehreren seiner Abschnitte stabförmig. Es ist aber auch möglich, im Zusammenhang mit der erfindungsgemäßen Befestigungseinrichtung einen zumindest abschnittsweise flexiblen oder biegeflexiblen Zuganker vorzusehen. Dies ermöglicht eine optimale Anpassung an die örtlichen Gegebenheiten. Beispielsweise könnte der Zuganker aus Federstahl sein.

Der Ringkörper kann zweckmäßigerweise einstückig sein. Somit ist er beispielsweise als ein einziges Kunststoffbauteil gefertigt.

Der Ringkörper ist ferner in einer bevorzugten Ausführungsform geschlossen, d.h. er ist beispielsweise von einem offenen Ende des Trägerkörpers, z.B. einem freien Ende eines U-Bügels, her auf den Trägerkörper aufbringbar. Somit ist also der Ringkörper vorzugsweise geschlossen.

Die geschlossene Konfiguration kann beispielsweise auch mehrteilig sein.

Bevorzugt ist vorgesehen, dass der Ringkörper an seinen Ringkörper-Spannelementen durch ein Verbindungselement oder einen Verbindungsabschnitt verbunden ist, so dass ein insgesamt geschlossener Ringkörper gebildet wird. Somit kann der Ringkörper beispielsweise unverlierbar am Trägerkörper befestigt werden. Durch die vorgenannte vorteilhafte Lösung, beispielsweise einen Zuganker lösbar mit den beiden Ringkörper-Spannenden zu verbinden, ist dennoch eine leichte Montierbarkeit oder Demontierbarkeit gegeben. Das Verbindungselement ist zweckmäßigerweise flexibel oder beweglich derart, dass die Ringkörper-Spannenden zueinander hin oder voneinander weg beweglich sind. Beispielsweise handelt es sich bei dem Verbindungselement um ein Filmscharnier oder dergleichen.

Die Geometrie der Schelle ist vorzugsweise auf die jeweilige Geometrie des Trägerkörpers angepasst. Wenn der Trägerkörper beispielsweise eine rechteckige Außenkontur aufweist, ist zweckmäßigerweise der Innenumfang oder die Innenkontur des Ringkörpers ebenfalls angepasst rechteckförmig. Selbstverständlich wird man dann zur Materialeinsparung auch einen ebenfalls im Wesentlichen rechteckigen Außenumfang oder eine rechteckige Außenkontur des Ringkörpers vorteilhaft vorsehen. Insbesondere dann, wenn der Trägerkörper zylindrisch ist, beispielsweise als Zylinderrohr ausgestaltet, ist der Innenumfang des Ringkörpers zweckmäßigerweise im Wesentlichen kreisringförmig. Auch der Außenumfang des Ringkörpers kann vorteilhaft im Wesentlichen kreisringförmig sein.

Der Spannkörper ist zweckmäßigerweise hülsenartig, d.h. als Hülse ausgestaltet, oder ringartig. Der Spannkörper kann aber auch teilringartig sein. In diesem Zusammenhang sei betont, dass der Spannkörper auch mehrteilig sein kann oder dass mehrere Spannkörper vorgesehen sein können.

Weiterhin ist es denkbar, dass der Spannkörper nicht unmittelbar auf den Ringkörper wirkt, sondern über ein beispielsweise als Keilelement ausgestaltetes Übertragungselement.

Auch bei dem Ringkörper ist nicht nur eine einteilige Bauform, sondern auch eine mehrteilige möglich. Beispielsweise kann der Ringkörper aus zwei oder mehr miteinander verbundenen oder verbindbaren Ringsegmenten bestehen.

Die Befestigungseinrichtung weist zweckmäßigerweise eine Klammer zum klammerartigen Halten eines Gegenstandes, beispielsweise eines Fahrrades oder eines sonstigen, mit insbesondere dem Kraftfahrzeug-Träger zu befördernden Gegenstandes, auf. Die Klammer wird beispielsweise von dem Zuganker gehalten, der mit der Schelle verbunden ist. Bevorzugt ist es, wenn ein und dieselbe Spannmutter zum einen zum Verspannen der Schelle am Trägerkörper und zum anderen zum Verstellen der Klammer in ihre den Gegenstand haltende Klammerstellung dient. Somit genügt eine einzige Betätigungshandlung, nämlich ein Verdrehen der Spannmutter, um zum einen die Klammer und zum anderen die Schelle zu schließen bzw. zu verspannen. Es versteht sich, dass man zu den vorgenannten Betätigungshandlungen auch separate Bauteile verwenden könnte, beispielsweise zwei von einander separate Spannmuttern, oder auch anstelle einer Spannmutter ein sonstiges Spann- oder Befestigungsbauteil, z.B. ein Hebelelement.

Zum Verspannen des Spannkörpers dient zweckmäßigerweise eine Spannmutter, mit der der Spannkörper in seine Spannstellung verstellbar ist. In Gegenrichtung, d.h. zum Lösen der Schelle, wird zweckmäßigerweise eine Eigenspannung des Ringkörpers im Sinne eines Vergrößern des Innenquerschnitts. Der Ringkörper drückt sozusagen den Spannkörper in seine Lösestellung. Bevorzugt ist hierbei, dass aufgrund der nicht selbsthemmenden Neigung der mindestens einen Schrägfläche keine Selbsthemmung zwischen einerseits dem Ringkörper und andererseits dem Spannkörper auftritt.

Zwischen dem Spannkörper und der Spannmutter kann beispielsweise eine Distanzhülse oder ein sonstiger Distanzkörper vorgesehen sein. Die Distanzhülse ist zweckmäßigerweise zwischen der Klammer und der Schelle vorgesehen.

Der Zuganker weist zweckmäßigerweise einen Gewindeabschnitt auf. Bevorzugt ist der Zuganker als ein Gewindestab ausgestaltet oder weist einen solchen auf. Die Spannmutter kämmt zweckmäßigerweise mit einem Gewindeabschnitt des Zugankers.

Bevorzugt bildet die Spannmutter einen Bestandteil einer Spannmutteranordnung und ist mittels eines mit ihr verdrehfest verbindbaren oder verbundbaren Handgriffkörpers drehbetätigbar. Um sie entlang des Gewindeabschnitts axial zu verstellen, weist die Spannmutter zweckmäßigerweise mindestens zwei relativ zueinander beweglich gelagerte Spannmutterteile auf. Die Spannmutterteile weisen Innengewinde auf, mit denen sie entlang des Gewindeabschnitts schraubbar sind. Weiterhin sind die Spannmutterteile relativ zueinander beweglich, wobei sie zwischen einer Eingriffstellung, bei der die Innengewinde der Spannmutterteile im Eingriff mit dem Gewindeabschnitt des Gewindekörpers sind, und einer Freigabestellung verstellbar sind, bei der die Innengewinde der Spannmutterteile außer Eingriff mit dem Gewindeabschnitt sind. Dazu ist ein Betätigungskörper vorgesehen. Wenn die Spannmutterteile außer Eingriff mit dem Gewindeabschnitt sind, können sie entlang desselben sehr schnell verschoben werden.

Die Betätigung der Spannmutteranordnung ist sehr einfach und schnell. Mit Hilfe des Betätigungskörpers - es können auch mehrere Betätigungskörper vorgesehen sein - kann die Spannmutter in ihre Freigabestellung verstellt werden, so dass ein Bediener die Spannmutter ohne eine Drehbetätigung entlang des Gewindeabschnitts verschieben kann. Ist jedoch eine Spannkraft erforderlich, verstellt der Betätigungskörper die Spannmutterteile in Eingriff mit dem Gewindeabschnitt, so dass die Spannmutter in Eingriff mit dem Gewindeabschnitt ist und verschraubt werden kann. Mindestens eines der Spannmutterteile kann auch fest mit dem Betätigungskörper verbunden oder mit diesem einstückig sein, sofern der Betätigungskörper quer zu dem Gewindeabschnitt, d.h. quer zur Schraubachse, beweglich ist und somit außer Eingriff mit dem Gewindeabschnitt gebracht werden kann.

Zum Verstellen der Spannmutter zwischen der Freigabestellung und der Eingriffstellung ist zwischen dem Betätigungskörper und den Spannmutterteilen zweckmäßigerweise eine Schrägfläche und/oder ein Keilgetriebe vorhanden. Beispielsweise weist der Betätigungskörper eine entsprechende Schrägfläche oder mehrere entsprechende Schrägflächen auf.

Eine Zwangsführung der Spannmutterteile in die Eingriffstellung und/oder die Freigabestellung, die vorteilhaft zwischen dem Betätigungskörper und mindestens einem Spannmutterteil vorgesehen ist, ist vorteilhaft.

Bei den Spannmutterteilen ist es ebenfalls vorteilhaft, wenn sie Schrägflächen aufweisen. Insbesondere ist eine solche Ausführungsform bevorzugt, bei der Schrägflächen des Betätigungskörpers und der Spannmutterteile aufeinander entlang gleitbar gelagert sind.

Es versteht sich, dass aber auch dann ein Keilgetriebe realisierbar ist, wenn nur der Betätigungskörper oder nur ein diesem zugeordnetes Spannmutterteil eine Schrägfläche oder Keilfläche aufweist.

Vorzugsweise ist eine Federanordnung vorhanden, die die Spannmutterteile in die Freigabestellung beaufschlagt. Diese Federanordnung ist zweckmäßigerweise zwischen dem Betätigungskörper und den Spannmutterteilen vorgesehen.

Der Betätigungskörper hat zweckmäßigerweise eine Aufnahme zum zumindest teilweisen, vorzugsweise insgesamten Aufnehmen der Spannmutter und/oder einer zwischen dem Betätigungskörper und der Spannmutter angeordneten Feder. Diese Aufnahme kann beispielsweise mit den vorgenannten Schrägflächen ausgestattet sein. Beispielsweise hat der Betätigungskörper eine topfartige Ausnehmung, in der eine oder mehrere Federn aufgenommen sind, wobei sich diese Ausnehmung mit Schrägflächen nach außen erweitert, die zugleich die Schrägflächen für das Keilgetriebe bilden. An diesen Schrägflächen ist die Spannmutter, bzw. sind deren Spannmutterteile verschieblich gelagert.

Der Betätigungskörper hat zweckmäßigerweise eine von der Spannmutter abgewandte Stützfläche zum Abstützen auf einem Widerlager derart, dass der Betätigungskörper die Spannmutter in die Eingriffstellung belastet, wenn er auf der Stützfläche abgestützt ist. Das Widerlager wird beispielsweise von einem Distanzelement oder von einem sonstigen zu spannenden Bauteil der Befestigungseinrichtung bereitgestellt.

Weiterhin ist die Spannmutter bzw. sind die Spannmutterteile vorteilhaft durch den Handgriffkörper von einer von der Stützfläche des Betätigungskörpers abgewandten Seite beaufschlagbar, bzw. abgestützt. Somit ist folgende Bedienung möglich:
Ein Bediener drückt über den Handgriffkörper auf die Spannmutter in Richtung des zu spannenden Objektes. Solange die Feder die Spannmutter jedoch in ihre Freigabestellung belastet, kann die Spannmutteranordnung axial außer Eingriff mit dem Gewindeabschnitt entlang desselben in Richtung des zu spannenden Objektes verschoben werden. Wenn dann die Stützfläche des Betätigungskörpers auf dem Objekt - direkt oder indirekt -abgestützt ist, drückt der Betätigungskörper entgegen der Federkraft der Federanordnung auf die Spannmutterteile und beaufschlagt diese in Eingriffstellung. Dann kann die Spannmutter in Richtung des zu befestigenden oder des zu spannenden Objektes geschraubt werden. Der Betätigungskörper hält sie dabei in Eingriff mit dem Gewindeabschnitt.

Bevorzugt ist es, wenn die Stützfläche vor den Handgriffkörper vorsteht. Es ist aber auch eine indirekte Abstützung möglich, beispielsweise indem ein Objekt, z.B. eine Distanzhülse oder dergleichen, in den Handgriffkörper eingreift und dort auf die Stützfläche des Betätigungskörpers wirkt.

Der Gewindeabschnitt durchdringt zweckmäßigerweise den Betätigungskörper. Es ist aber auch denkbar, dass der Gewindeabschnitt neben dem Betätigungskörper verläuft.

Der Betätigungskörper ist zweckmäßigerweise drehfest mit der Spannmutter verbunden oder verbindbar. Dies ist beispielsweise durch eine Zahnung, durch eine oder mehrere Nuten, in die entsprechende Vorsprünge eingreifen, ohne weiteres realisierbar.

Dies könnte man auch für eine Drehfestigkeit zwischen Betätigungskörper und Handgriffkörper realisieren. Der Betätigungskörper und der Handgriffkörper sind nämlich vorteilhaft drehfest miteinander verbunden oder verbindbar.

An dieser Stelle sei bemerkt, dass selbstverständlich auch eine dauerhafte oder temporäre Drehfestigkeit zwischen Handgriffkörper und unmittelbar der Spannmutter vorgesehen sein kann.

Die Formulierung "verbunden" oder "verbindbar" ist so zu verstehen, dass die jeweilige Drehfestigkeit dauerhaft sein kann oder auch temporär, beispielsweise abhängig von einer axialen Position der jeweiligen Komponenten (Betätigungskörper zu Spannmutter, Spannmutter zu Handgriffkörper, Betätigungskörper zu Handgriffkörper). Mithin ist es also vorteilhaft, wenn trotz Drehfestigkeit eine axiale Verschieblichkeit der vorgenannten Komponenten relativ zueinander zumindest temporär oder abhängig von einer axialen Position möglich ist.

Eine drehfeste Kombination Handgriffkörper - Betätigungskörper - Spannmutter ist beispielsweise dadurch realisierbar, dass der Handgriffkörper drehfest mit dem Betätigungskörper und der Betätigungskörper drehfest mit der Spannmutter verbindbar oder verbunden ist. Nochmals sei betont, dass auch eine direkte Drehfestigkeit zwischen einerseits dem Handkörper und andererseits der Spannmutter ohne weiteres realisierbar ist.

Bei der Befestigungseinrichtung ist vorteilhaft vorgesehen, dass die Spannmutteranordnung zur Drehfestlegung des Handgriffkörpers bezüglich der Spannmutter ein Schloss aufweist, das zwischen einer eine Drehmitnahme der Spannmutter realisierenden Offenstellung und einer Schließstellung verstellbar ist, in der der Handgriffkörper gegenüber der Spannmutter frei drehbar ist. Zur Drehfestlegung des Handgriffkörpers bezüglich der Spannmutter ist also vorteilhaft ein Schloss vorgesehen, das zwischen einer eine Drehmitnahme der Spannmutter realisierenden Offenstellung und einer Schließstellung verstellbar ist, in der der Handgriffkörper gegenüber der Spannmutter frei drehbar ist. Das Schloss ist zweckmäßigerweise drehfest mit dem Handgriffkörper verbunden.

Das Schloss wirkt vorteilhaft über den Betätigungskörper auf die Spannmutter und ist in der Schließstellung außer Eingriff mit dem Betätigungskörper. In der Offenstellung ist es in Eingriff mit dem Betätigungskörper. Wenn nunmehr der Betätigungskörper seinerseits mit der Spannmutter drehfest verbunden oder verbindbar ist, ist auf diesem Wege eine Drehmitnahme zwischen Handgriffkörper und Spannmutter realisiert.

Selbstverständlich ist es möglich, die Befestigungseinrichtung, insbesondere die Spannmutter oder die Spannmutteranordnung als Ganzes, anderweitig zu verschließen. Beispielsweise könnte ein Schloss vorgesehen sein, das mit dem Gewindeabschnitt zusammenwirkt. Das Schloss könnte beispielsweise einen Schließvorsprung haben, der in der Schließstellung des Schlosses in den Gewindeabschnitt eingreift und so ein Verstellen der Spannmutteranordnung, insbesondere der Spannmutter oder eines der Spannmutterteile, im Sinne eines Verriegelns behindert.

Die Befestigungseinrichtung weist zweckmäßigerweise ein, insbesondere an der Spannmutteranordnung und/oder am Betätigungskörper angeordnetes, Schloss auf, mit dem die Spannmutter an dem Gewindekörper ortsfest verschließbar ist.

Bei der Befestigungseinrichtung ist vorteilhaft vorgesehen, dass der Betätigungskörper, insbesondere axial, beweglich an dem Handgriffkörper und/oder dem Gewindeabschnitt gelagert ist. Der Betätigungskörper ist also zweckmäßigerweise beweglich an dem Handgriffkörper gelagert, beispielsweise axial beweglich. Auch eine Beweglichkeit quer zur Achse oder entlang einer gekrümmten Bewegungsbahn ist denkbar. Die Achse wird beispielsweise durch den Gewindeabschnitt definiert. Wenn nunmehr der Betätigungskörper zumindest einen Teil der Spannmutter aufweist bzw. ein Spannmutterteil realisiert, kann der Betätigungskörper außer Eingriff oder in Eingriff mit dem Gewindeabschnitt gebracht werden.

Bei der Befestigungseinrichtung ist vorteilhaft vorgesehen, dass der Betätigungskörper und/oder die Spannmutter im Wesentlichen in einem Innenraum des Handgriffkörpers aufgenommen ist.

Besonders bevorzugt ist die Verwendung der Erfindung bei Kraftfahrzeug-Trägern, insbesondere Fahrradträgern. Der Kraftfahrzeug-Träger kann beispielsweise am Heck oder auf dem Dach eines Kraftfahrzeuges befestigt oder befestigbar sein. Der Kraftfahrzeug-Träger ist beispielsweise ein Heckträger, der insbesondere schubladenartig aus einem Kraftfahrzeugheck ausziehbar ist. Auch eine Befestigung des Kraftfahrzeug-Trägers auf einer Anhängevorrichtung, beispielsweise einer Kugelkopfkupplung, ist vorteilhaft. Dazu weist der Kraftfahrzeug-Träger eine entsprechende Befestigungsvorrichtung zur Befestigung an der Anhängekupplung auf. Die Befestigungseinrichtung ist zweckmäßigerweise zum Befestigen eines Gegenstandes an dem Kraftfahrzeug-Träger ausgestaltet, kann aber auch zur Fixierung von Komponenten des Kraftfahrzeug-Trägers dienen.

Nachfolgend wird ein Ausführungsbeispiel der Erfindung anhand der Zeichnung erläutert. Es zeigen:
- Figur 1: eine perspektivische Schrägansicht eines Kraftfahr- zeug-Trägers mit einer erfindungsgemäßen Befesti- gungseinrichtung,
- Figur 2: eine perspektivische Schrägansicht der Befesti- gungseinrichtung gemäß Figur 1,

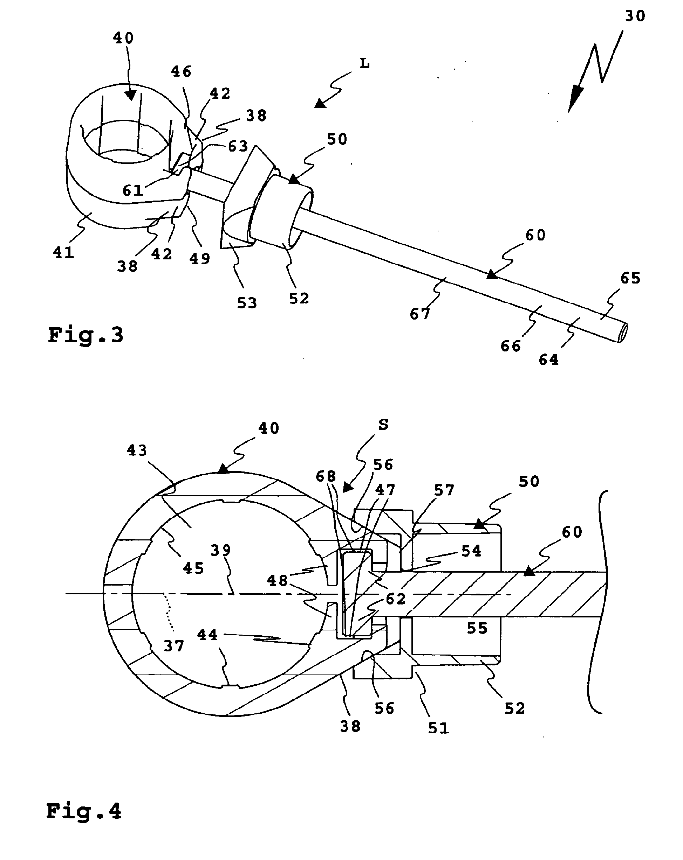

- Figur 3: eine perspektivische Schrägansicht einer Schelle und eines Zugankers der Befestigungseinrichtung ge- mäß Figur 2,
- Figur 4: eine Querschnittsansicht etwa in einer Schnittlinie A-A in Figur 2 eines vorderen Teils der Befesti- gungseinrichtung, nämlich der Schelle, des Zugan- kers sowie eines Spannkörpers,
- Figur 5a: eine Querschnittsansicht einer Spannmutteranordnung der Befestigungseinrichtung gemäß Figur 2 entlang einer Schnittlinie A-A, wobei die Spannmutteranord- nung in Freigabestellung ist,
- Figur 5b: die Ansicht gemäß Figur 5a jedoch mit der Spannmut- ter in Eingriffstellung,
- Figur 6: eine Explosionsdarstellung der Spannmutteranordnung gemäß Figur 5a von schräg oben,
- Figur 7: eine Explosionsdarstellung der Spannmutteranordnung gemäß Figur 5a von schräg unten,
- Figur 8: die Spannmutteranordnung von unten im montierten Zustand
- Figur 9a: die Spannmutteranordnung gemäß Figur 8, jedoch mit einem entfernten Verschlussring, wobei ein Schloss in Eingriff mit einem Betätigungskörper ist,
- Figur 9b: die Ansicht entsprechend Figur 9a, wobei das Schloss jedoch außer Eingriff ist,
- Figur 9c: die Ansicht gemäß Figur 9b, wobei der Handgriff bzw. das Schloss gegenüber der Ansicht gemäß Figur 9b drehverstellt sind,
- Figur 10: eine Explosionsdarstellung eines zweiten Ausfüh- rungsbeispiels einer erfindungsgemäßen Befesti- gungseinrichtung, die in
- Figur 11: montiertem Zustand gezeigt ist,
- Figur 12: eine Explosionsdarstellung eines dritten Ausfüh- rungsbeispiels der Erfindung, das in
- Figur 13: zusammenmontiert dargestellt ist und von dem in
- Figur 14: ein vorderes Detail vergrößert dargestellt ist.

Ein Kraftfahrzeug-Träger 10 ist am Heck eines Kraftfahrzeugs 11 (schematisch) befestigbar, beispielsweise an dessen nicht dargestellter Anhängekupplung, mittels einer Haltevorrichtung 12. Die Haltevorrichtung 12 befindet sich an einer im Wesentlichen U-förmigen Trägerbasis 13, an der ein Schwenkgestell 14 des Kraftfahrzeug-Trägers 10 schwenkbar gelagert ist. Das Schwenkgestell 14 ist um eine Schwenkachse schwenkbar, die im Wesentlichen parallel zu einem Leuchtenträger 15 des Kraftfahrzeug-Trägers 10 verläuft. Der Leuchtenträger 15 trägt Leuchten 16 sowie einen Kennzeichenträger 17. Zwischen dem Kennzeichenträger 17 und der Haltevorrichtung 12 erstrecken sich Trägerarme 18 des Schwenkgestells 14, die in Gebrauchsstellung des Kraftfahrzeug-Trägers 10 auf darunter liegende, in der Zeichnung durch sie verdeckte Trägerarme der Trägerbasis 13 aufliegen. Das Schwenkgestell 14 hat ebenfalls eine U-förmige Gestalt.

Die Trägerbasis 13 sowie das Schwenkgestell 14 dienen zum Tragen und Befördern von Gegenständen auf dem Kraftfahrzeug-Träger 10. Beispielsweise sind an den Trägerarmen 18 Fahrradträgerrinnen 19 zum Aufstellen von Fahrrädern auf den Kraftfahrzeug-Träger 10 vorgesehen. Diese Fahrräder können mit flexiblen Riemen 20 befestigt werden.

Eine weitere Befestigungsmöglichkeit ergibt sich durch einen U-förmigen Bügel 21, der in Gebrauchsstellung des Kraftfahrzeug-Trägers 10 winkelig von der Trägerbasis 13 bzw. den Trägerarmen 18 absteht. In dieser nach oben vor die Trägerarme 18 vorstehenden Stellung kann der Bügel 21 mittels Klemmschrauben 22 festgelegt werden, die in ihrer Lösestellung ein Schwenken des Bügels 21 in Richtung der Trägerarme 18 ermöglichen. Dadurch baut der Kraftfahrzeug-Träger 10 in seiner Nichtgebrauchsstellung, in der seine Komponenten im Wesentlichen zusammengefaltet sind, d.h. beispielsweise auch die Fahrradträgerrinnen 19 in einen Innenraum zwischen den Trägerarmen 18 geschwenkt sind, äußerst klein.

An dem Bügel 21 können auf dem Kraftfahrzeug-Träger 10 aufgelegte Gegenstände, beispielsweise Fahrräder, zusätzlich befestigt werden. Erfindungsgemäße Befestigungseinrichtungen 30, von denen beispielhaft eine einzige dargestellt ist, dienen zur sicheren Befestigung der Fahrräder am Bügel 21, bauen gleichzeitig sehr kompakt und sind zudem bequem und schnell handhabbar:
Die Befestigungseinrichtung 30 umfasst eine Klammer 31, deren Klammerschenkel 32 an einem Klammerlager 33 beweglich zwischen einer Offenstellung und einer Klammerstellung gelagert sind.

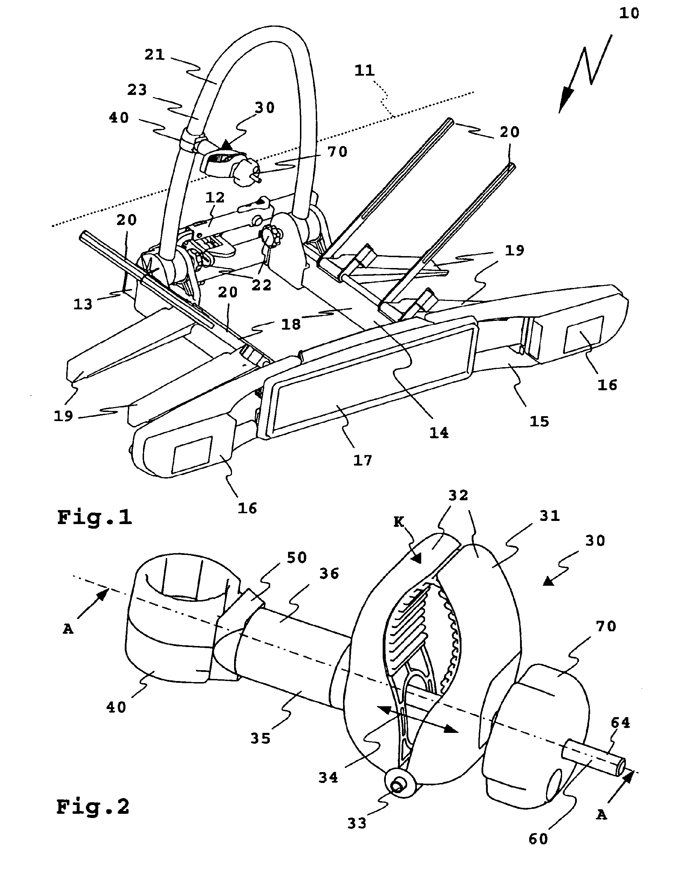

In Figur 2 ist beispielsweise die Klammerstellung K dargestellt, die zum Umgreifen bzw. Klammern des zu haltenden Gegenstandes dient, beispielsweise eines Rahmen-Rohres eines Fahrrades. Zwischen den Klammerschenkeln 32 kann in an sich bekannter Weise eine schematisch dargestellte Feder 34 angeordnet sein, die die beiden Klammerschenkel 32 in ihre Offenstellung beaufschlagt.

Zur Herstellung einer Distanz zwischen dem Bügel 21 und der Klammer 31, die ein auf einem der beiden Paare von Fahrradträgerrinnen 19 abgestelltes Fahrrad hält, in Figur 1 beispielsweise dasjenige Fahrrad, das näher beim Bügel 21 angeordnet ist, ist ein Distanzkörper 35, beispielsweise eine Distanzhülse 36 vorgesehen. Für eine Befestigungseinrichtung, die den vom Kraftfahrzeug 11 weiter entfernten Fahrradträgerrinnen 19 zugeordnet ist, würde man eine entsprechend längere Distanzhülse 36 vorsehen.

Die jeweilige Befestigungseinrichtung 30 ist mittels einer Schelle 40 an dem Bügel 21 befestigbar, der insofern einen Trägerkörper 23 für die Befestigungseinrichtung 30 bildet. Die Schelle 40 umgreift den jedenfalls im Bereich der Schelle 40 im Wesentlichen zylindrischen, beispielsweise durch einen Rohrkörper gebildeten Trägerkörper 23, mittels eines Ringkörpers 41, dessen Ringkörper-Spannenden 42 in einer Spannstellung S durch einen Spannkörper 50 im Sinne eines Verspannens des Trägerkörpers 23 gespannt sind.

In einer Lösestellung L des Spannkörpers 50 hingegen ist ein Innenquerschnitt 43 des Ringkörpers 41 vergrößert, so dass die Schelle 40, also insgesamt die Befestigungseinrichtung 30, entlang des Bügels 21 verschieblich ist. Zu einer guten Verschieblichkeit der Schelle 40 entlang des Bügels 21 tragen auch Stützvorsprünge 44 bei, die vom im Wesentlichen kreisförmigen Innenumfang 45 der Schelle 40 nach radial innen vorstehen und mit denen sich die Schelle 40 am Trägerkörper 23 abstützt. Dadurch haftet der Innenumfang 45 insbesondere bei feuchtem Trägerkörper 23 nicht flächig, adhäsiv an diesem an.

Zum Verspannen der Schelle 40 am Trägerkörper 23 ist ferner ein Zuganker 60 vorgesehen, der zugfest an dem Ringkörper 41 mittels einer Zuganker-Halterung 46 befestigt ist. Zugvorsprünge 62, die beispielsweise durch einen Vierkant 63 gebildet sind, sind in Zuganker-Aufnahmen 47 des Ringkörpers 41 aufgenommen. Die Zuganker-Aufnahmen 47 sind an den Ringkörper-Spannenden 42 vorgesehen und einander zugewandt offen. Die Zuganker-Aufnahmen 47 sind U-förmig. Durch die kantige Ausgestaltung der Zuganker-Aufnahmen 47 ist das Zugwiderlageelement 61, das wie gesagt mehrkantig oder polygonal an seinem Außenumfang ist, drehfest aufgenommen. Die Zuganker-Aufnahmen 47 weisen zwischen dem Innenquerschnitt 43 und dem Zuganker 60 angeordnete Vorsprünge 48 auf, so dass der Zuganker 60 auch in Lösestellung nicht unmittelbar in Kontakt mit dem Innenquerschnitt 43 angeordneten Trägerkörper 23 kommt. Der Zuganker 60 steht mit einem Zugankerstab 64 radial von der Schelle 40 ab. Der Zugankerstab 64 durchdringt eine an Übergreifvorsprüngen 49 vorgesehene Durchtrittsöffnung. Die Übergreifvorsprünge 49 sind Bestandteile der Zuganker-Aufnahmen 47 und übergreifen das Zugwiderlageelement 61 bezüglich des Innenquerschnitts 43 von radial außen.

Der Zugankerstab 64 durchdringt den Spannkörper 50, den Distanzkörper 35, die Klammer 31 nahe bei dem Klammerlager 33, zweckmäßigerweise die zwischen den Klammerschenkeln 32 angeordnete Feder 34 sowie schließlich eine Spannmutteranordnung 70, die vom freien Ende 65 des Zugankerstabes 64 her auf diesen aufgeschraubt ist.

Die Spannmutteranordnung 70 dient zum Spannen der Befestigungseinrichtung 30. Die Spannmutteranordnung 70 dient zum Schließen der Klammer 31 bzw. zum Beaufschlagen derselben in ihre Klammerstellung K und zudem zum Spannen der Schelle 40, d.h. zum Beaufschlagen des Spannkörpers 50 in dessen Spannstellung S. Anstelle der Spannmutteranordnung 70 könnte auch eine konventionelle Spannmutter verwendet werden.

Die Spannmutteranordnung 70 umfasst eine mehrteilige Spannmutter 71, die vorliegend zwei Spannmutterteile 72 aufweist. Die Spannmutter 71 kann mit einem Handgriffkörper 80 drehbetätigt werden, um einen zumindest im Bereich des freien Endes 65 des Zugankers 60 vorgesehenen Gewindeabschnitt 66 aufgeschraubt zu werden. Im Bereich des Gewindeabschnitts 66 bildet der Zuganker 60 einen Gewindekörper 67.

Durch ein Aufschrauben auf den Gewindeabschnitt 66 belastet die Spannmutter 71 zunächst die Klammer 31 bzw. deren Klammerschenkel 32 in die Klammerstellung K und zudem über die Klammer 31 und den Distanzkörper 35 - es können auch mehrere Distanzkörper vorgesehen sein - den Spannkörper 50 in seine Spannstellung S. Dabei stützt sich der Distanzkörper 35 auf einer Stützfläche 51 des Spannkörpers 50 ab. Die Stützfläche 51 ist ringförmig und erstreckt sich um einen Eingreifvorsprung 52 herum, der in einen Innenraum der Distanzhülse 36 eingreift. Der Eingreifvorsprung 52 ist kreiszylindrisch an seiner Außenseite passend zu einem kreiszylindrischen Innenumfang der Distanzhülse 36, so dass diese mit geringem oder keinem Spiel auf dem Spannkörper 50 aufsitzt.

An seiner dem Eingreifvorsprung 52 entgegengesetzten Seite weist der Spannkörper 50 einen Spannflächenteil 53 auf. Der Spannflächenteil 53 ist pyramidenstumpfartig.

Der Zuganker 60 durchdringt eine Durchtrittsöffnung 54 einer Wand 55 zwischen dem Eingreifvorsprung 52 und dem Spannflächenteil 53. Ein Innenumfang der Durchtrittsöffnung 54 passt zum Außenumfang des Zugankerstabs 64, so dass der Spannkörper 50 an dem Zuganker 60 geführt ist.

Wenn also die Spannmutteranordnung 70 auf den Gewindeabschnitt 66 aufgeschraubt wird, beaufschlagt sie den Spannkörper 50 zumindest indirekt, wobei dieser entlang einer durch eine Mittelachse des Zugankerstabs 64 definierte Spannbewegungsbahn 37 geführt ist. Der Spannkörper 50 wird dabei in Richtung der Schelle 40 verstellt, wobei Schrägflächen 56 an der Innenseite des Spannflächenteils 53 an Schrägflächen 38 an den Ringkörper-Spannenden 42 entlang gleiten, derart, dass diese zueinander hin verstellt werden. Dadurch nimmt der Innenquerschnitt 43 ab, wodurch sich die Schelle 40 am Trägerkörper 23 verspannt. Die Schrägflächen 38 sind an den den Zuganker-Aufnahmen 47 abgewandten Seiten der Ringkörper-Spannenden 42 vorgesehen. Die Schrägflächen 38 verlaufen von den dem Zuganker 60 zugewandten Enden der Ringkörper-Spannenden 42 her tangential weg in Richtung des im Wesentlichen kreisförmigen Außenumfangs des Ringkörpers 41.

Die Schrägflächen 38 und 56 sind vorliegend Planflächen. Die Schrägflächen 38, 56 liegen im Wesentlichen flächig aneinander an, so dass der Spannkörper 50 sozusagen auf die Schelle 40 bzw. den Ringkörper 41 aufgleitet. Dabei beaufschlagt der Spannkörper 50 die Ringkörper-Spannenden 42 zueinander hin, d.h. in Richtung der Spannbewegungsbahn 37.

Ein Abstand der Schrägflächen 38, 56 von der Spannbewegungsbahn 37 nimmt in Richtung eines Zentralbereiches 39 des Innenquerschnitts 43 zu. Dabei ist beim Ausführungsbeispiel eine symmetrische Anordnung getroffen, d.h. die Spannbewegungsbahn 37 bildet sozusagen eine Mittelachse oder Spiegelachse bezüglich der beidseits von ihr angeordneten Schrägflächen 38, 56. Dies erlaubt ein gleichmäßiges Spannen der beiden Ringkörper-Spannenden 42 zur Spannbewegungsbahn 37 hin.

Die Zugvorsprünge 62 und die sie aufnehmende Zugankerhalterung 46, mithin also eine Tiefe der Zuganker-Aufnahmen 47, ist mit einem Spiel 68 versehen, so dass eine Bewegung der Ringkörper-Spannenden 42 zur Spannbewegungsbahn 37 hin möglich ist. Dennoch greifen die Zugvorsprünge 62 stets ausreichend tief in die Zuganker-Aufnahmen 47 ein, so dass der Zuganker 60 stets sicher am Ringkörper 41 gehalten wird. Dazu trägt auch bei, dass die Ringkörper-Spannenden 42 in einen Innenraum 57 mit den Schrägflächen 56 des Spannkörpers 50 eingreifen. Zweckmäßigerweise liegen die Schrägflächen 56 auch im Bereich des Zugwiderlagerelements 61 außenseitig an den Ringkörper-Spannenden 42 an, so dass die Zuganker-Aufnahmen 47 in Richtung des Zugankers 60 kraftbeaufschlagt sind. Der Zuganker 60 wird somit also besonders sicher und fest am Ringkörper 41 gehalten.

Insgesamt ergeben sich also besonders günstige Kraftverhältnisse derart, dass sowohl die von dem Zuganker 60 ausgeübte Zugkraft als auch die durch den Spannkörper 50 ausgeübte, den Innenquerschnitt 43 verkleinernde Spannkraft stets in Richtung des Zentralbereichs 39 wirken.

Zudem ist auch eine besonders günstige, platzsparende Anordnung getroffen, da nämlich der Zuganker 60, der gleichzeitig eine Befestigungsbasis für die weiteren Komponenten der Befestigungseinrichtung 30, nämlich insbesondere der Klammer 31, bildet, radial vom Trägerkörper 23 absteht. Seitlich neben dem Trägerkörper 23 ist also kein Platz notwendig.

Die Handhabung der Spannmutteranordnung 70 ist besonders einfach und geht schnell vonstatten.

Der Handgriffkörper 80 ist knaufartig ausgestaltet und liegt günstig in der Hand eines Bedieners. Der Handgriffkörper 80 bildet ein Gehäuse 81 für die Spannmutter 71 sowie im Wesentlichen für einen Betätigungskörper 90, der zum Betätigen der Spannmutterteile 72 in die Eingriffstellung E vorgesehen ist.

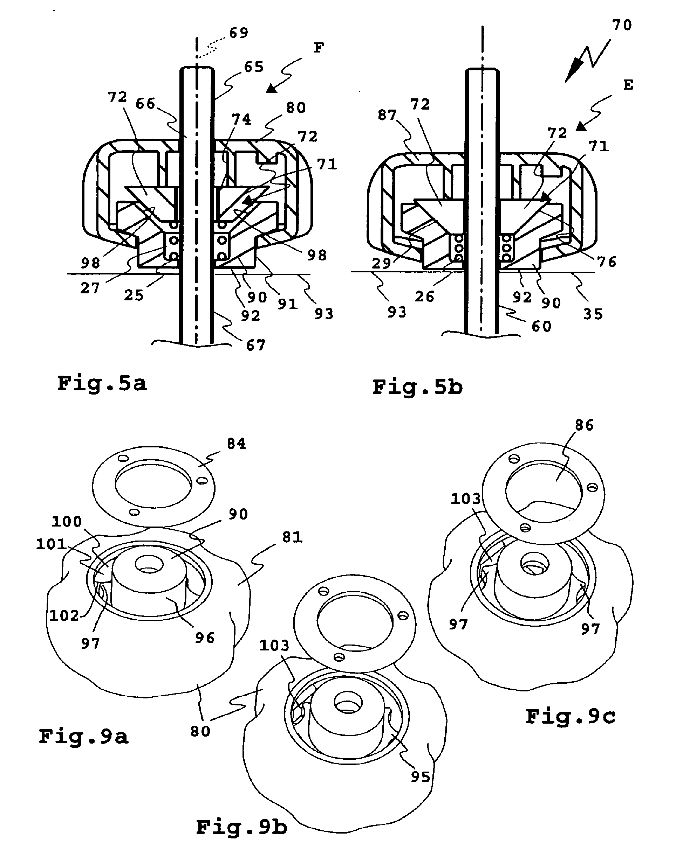

Prinzipiell könnte der Handgriffkörper 80 einteilig ausgestaltet sein, was in der Darstellung gemäß Figuren 5a, 5b der Fall ist, oder auch mehrteilig. Aus montagetechnischer Sicht ist es vorteilhaft, wenn der Innenraum 82 durch eine Montageöffnung 83 zugänglich ist, die durch einen Deckel 84 verschließbar ist. Der Deckel 84 ist beispielsweise mittels nicht dargestellter, durch Schraubenöffnungen 85 durchgesteckter Schraubbolzen oder Nieten am Gehäuse 81 befestigbar. Möglich wäre auch ein Gewinde am Außenumfang des Deckels 84, das in ein Gewinde am Innenumfang der Montageöffnung 83 eingeschraubt wird.

Der Deckel 84 hat eine Durchtrittsöffnung 86 für einen Stützabschnitt 91 des Betätigungskörpers 90. An einer Stirnseite des Stützabschnitts 91 ist eine Stützfläche 92 vorgesehen, mit der sich der Betätigungskörper 90 an einem Widerlager 93 abstützen kann, beispielsweise der Klammer 31. Der Stützabschnitt 91 ist im Wesentlichen zylindrisch. Die Stützfläche 92 hat eine Durchtrittsöffnung 94 für den Zuganker 60, insbesondere dessen Zugankerstab 64. Der Betätigungskörper 90 steht mit dem freien Ende des Stützabschnitts 91 vor das durch den Deckel 84 geschlossene Gehäuse 81 des Handgriffkörpers 80 vor, so dass sich der Betätigungskörper 90 auf dem Widerlager 93 abstützen kann, um in den Innenraum 82 hinein verlagert zu werden. Mithin ist also der Betätigungskörper 90 bezüglich des Handgriffkörpers 80 beweglich gelagert. Der Handgriffkörper 80 wird dabei beispielsweise durch den Innenumfang der Durchtrittsöffnung 86 geführt, an der der zylindrische Außenumfang des Stützabschnitts 91 entlang gleitet.

An dieser Stelle sei bemerkt, dass vorliegend die Durchtrittsöffnung 86 kreisförmig ist, korrespondierend dazu auch der Außenumfang des Stützabschnitts 91, so dass der Betätigungskörper 90 bezüglich der Durchtrittsöffnung 86 verdrehbar ist. Dort lässt sich auf einfache Weise aber auch eine Verdrehsicherung oder eine Drehmitnahme realisieren, beispielsweise durch einen Vorsprung am Außenumfang des Stützabschnitts 91, der in eine Ausnehmung an der Durchtrittsöffnung 86 eingreift (oder umgekehrt), durch eine Verzahnung zwischen beiden Komponenten oder dergleichen. Zweckmäßig ist es allerdings, wenn der Betätigungskörper 90 zwar drehfest am Handgriffkörper 80 ist, jedoch axial entlang einer durch den Zugankerstab 64 definierten Verstellachse 69 beweglich.

Der Zugankerstab 64 durchdringt nicht nur den Betätigungskörper 90 (Durchtrittsöffnung 94), sondern auch den Handgriffkörper 80, nämlich an einer Zuganker-Durchtrittsöffnung 88 an einer Deckwand 87 des Gehäuses 81.

Eine Drehmitnahme zwischen dem Handgriffkörper 80 und dem Betätigungskörper 90 wird durch einen Zahnkranz 95 des Betätigungskörpers 90 sowie ein Schloss 100 realisiert, das bezüglich des Handgriffkörpers 80 drehfest ist. Das Schloss 100 ist lediglich schematisch dargestellt und beispielsweise in eine Durchtrittsöffnung oder Einstecköffnung 89 an der Deckwand 87 eingesteckt. Der Zahnkranz 95 befindet sich an einer der Stützfläche 92 entgegengesetzten Seite des Betätigungskörpers 90 und steht nach radial außen vor den zylindrischen Außenumfang 96 des Stützabschnitts 91 vor. Die Zahnung des Zahnkranzes 95 ist ausgerundet, d.h. zwischen Zähnen 97 des Zahnkranzes 95 sind ausgerundete Abschnitte vorgesehen.

Wenn die Spannmutteranordnung 70 unverschlossen ist, das Schloss 100 also in seiner Offenstellung ist (Figur 9a), greift eine Mitnahmekontur, vorliegend eine Zylinderkontur 101, des Schlosses 100 in eine der Ausnehmungen zwischen den Zähnen 97 ein. Dadurch ist eine Drehmitnahme zwischen dem Schloss 100, das seinerseits fest im Handgriffkörper 80 sitzt und letztlich eine Drehmitnahme zwischen dem Handgriffkörper 80 und dem Betätigungskörper 90 realisiert.

Wenn das Schloss 100 jedoch geschlossen ist, ist eine Abflachung 103 des Riegelelements 102 in Richtung des Zahnkranzes 95 verstellt, beispielsweise verschwenkt, so dass der Zahnkranz 95 frei am Riegelelement 102 vorbei drehen kann. Wenn nun also ein Bediener den Handgriffkörper 80 dreht, ist dieser außer Eingriff mit dem Betätigungskörper 90 und dreht frei an diesem vorbei. Eine beispielhafte erste und zweite Drehposition ist in den Figuren 9b, 9c dargestellt, wobei das Schloss 100 mit der Abflachung 103 frei an den Zähnen 97 vorbei dreht. Somit kann also die mit dem Betätigungskörper 90 drehfest verbundene Spannmutter 71 nicht betätigt werden.

Die Drehmitnahme zwischen der Spannmutter 71 und dem Betätigungskörper 90 ist durch eine polygonale Aufnahme 99 realisiert, in der die Spannmutterteile 72, die außenseitig ebenfalls eine polygonale Kontur aufweisen, drehfest, jedoch axial bezüglich der Verstellachse 69 verstellbar, aufgenommen sind. Die beiden Spannmutterteile 72 sind als Keilstücke ausgestaltet. Die Spannmutterteile 72 haben an ihrer dem Gewindeabschnitt 66 zugewandten Schraubseite 73 zylindrische Ausnehmungen mit Innengewinden 74, die in der Eingriffstellung E in Eingriff mit dem Gewindeabschnitt 66 sind.

An einer der Schrägflächenseite 75 entgegengesetzten Schrägflächenseite eines jeweiligen Spannmutterteils 72 befindet sich eine Schrägfläche 76, mit der das Spannmutterteil 72 an einer Schrägfläche 98 des Betätigungskörpers 90 entlang gleitet. Die Schrägflächen 98 sind an einer Aufnahme 99 des Betätigungskörpers 90 vorgesehen, in der die beiden Spannmutterteile 72 im Wesentlichen aufgenommen sind.

Ein Abstand der Schrägflächen 76, 98 von der Verstellachse 69 ist im Bereich der Stützfläche 92 kleiner als in größerem Abstand zu der Stützfläche 92. Die Schrägflächen 76, 98 sind also zur Stützfläche 92 hin schräg geneigt. Die Schrägflächen 76, 98 bilden Bestandteile eines Schrägflächengetriebes oder Keilgetriebes 29 zum Verstellen der Spannmutterteile 72 in die Eingriffstellung E.

Zudem umfasst die Aufnahme 99 noch eine Federaufnahme 27, in der eine Feder 25 einer Federanordnung 26 aufgenommen ist. Die Feder 25 stützt sich einerseits am Betätigungskörper 90 und andererseits an den beiden Spannmutterteilen 72 ab, nämlich an einer Feder-Stützseite 77. Die Federanordnung 26 stützt sich am Boden der Aufnahme 99 ab. Die Feder-Stützseite 77 verläuft zwischen der jeweiligen Schraubseite 73 und der Schrägflächenseite 75 eines Spannmutterteils 72.

Weiterhin sind die Spannmutterteile 72 mit ihren Handgriffkörper-Stützseiten 78, d.h. den Feder-Stützseiten 77 entgegengesetzten Seiten, am Handgriffkörper 80 abgestützt, beispielsweise an der Deckwand 87 oder daran angeordneten Stützvorsprüngen (Figuren 5a, 5b).

Die Federanordnung 26 beaufschlagt die Spannmutterteile 72 in die Freigabestellung F (Figur 5a).

Zwischen den Stützseiten 77, 78 sowie der Schraubseite 73 und der Schrägflächenseite 75 erstreckt sich jeweils eine Drehmitnahmeseite 79 eines Spannmutterteils 72. Diese Drehmitnahmeseiten 79 liegen an korrespondierenden Drehmitnahmeseiten 28 der Aufnahme 99 zweckmäßigerweise im Wesentlichen flächig an, so dass die Spannmutterteile 72 beim Drehen des Betätigungskörpers 90 dreh-mitgenommen werden.

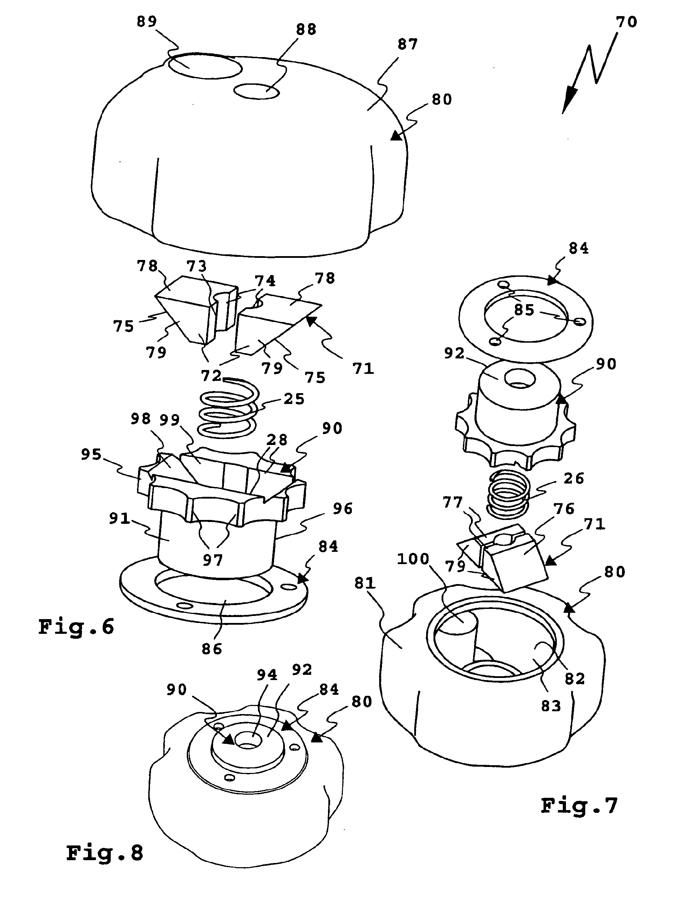

Die Bedienung der Spannmutteranordnung 70 gestaltet sich folgendermaßen:
Solange sich die Stützfläche noch nicht am Widerlager 93 abstützt (Figur 5a), hält die sich am Betätigungskörper 90 abstützende Federanordnung 26 die Spannmutterteile 72 in der Freigabestellung F. Dabei stützt sich der Betätigungskörper 90 entgegen der Kraft der Federanordnung 26 am Handgriffkörper 80 ab, beispielsweise am Boden des Gehäuses 81 oder bei der mehrteiligen Bauform gemäß Figuren 6 bis 9c am Deckel 84.

Zur Abstützung dient dabei beispielsweise ein Randvorsprung des Betätigungskörpers 90, vorliegend beispielsweise der Zahnkranz 95. Die Spannmutteranordnung 70 kann dabei entlang des Gewindeabschnitts 66 ohne Drehbetätigung frei verschoben werden, d.h. entlang der Verstellachse 69.

Wenn die Stützfläche 92 am Widerlager 93 anschlägt, mithin also beispielsweise die Spannmutteranordnung 70 zur Klammer 41 hin verstellt ist, kann die Spannmutter 71 durch Kraftbeaufschlagung in Richtung des Widerlagers 93 in die Eingriffstellung E verstellt werden. Ein Bediener drückt dazu beispielsweise auf die Deckwand 87. Der Handgriffkörper 80 belastet die Spannmutterteile 72 in Richtung des Widerlagers 93 entgegen der Federkraft der Federanordnung 26. Dabei gleiten die Spannmutterteile 72 mit ihren Schrägflächen 76 an den korrespondierenden Schrägflächen 98 des Betätigungskörpers 90 entlang, so dass die Innengewinde 74 in Richtung der Verstellachse 69, d.h. zum Gewindeabschnitt 66 hin, verlagert werden und schließlich in diesen eingreifen.

Dann kann die Spannmutter 71 zum Widerlager 93 hin geschraubt werden. Ein Lösen der Spannmutter 70 wird dabei dadurch verhindert, dass die Spannmutter 71 den Betätigungskörper 90 in Richtung des Widerlagers 93 drückt, dieser aber aufgrund des Widerlagers 93 nicht ausweichen kann und über das Keilgetriebe 29 die beiden Spannmutterteile 72 in die Eingreifstellung E mit einer Kraft beaufschlagt.

Es versteht sich, dass auch eine unmittelbare Drehmitnahme zwischen Handbetätigungskörper und Spannmutter realisiert sein könnte. Beispielsweise könnten die von der Deckwand 87 abstehenden, auf die Handgriffkörper-Stützseiten 78 wirkenden Stützvorsprünge in entsprechende Aufnahmen an den Spannmutterteilen 72 eingreifen. Der Betätigungskörper 90 könnte dann bezüglich des Handgriffkörpers 80 drehbeweglich gelagert sein.

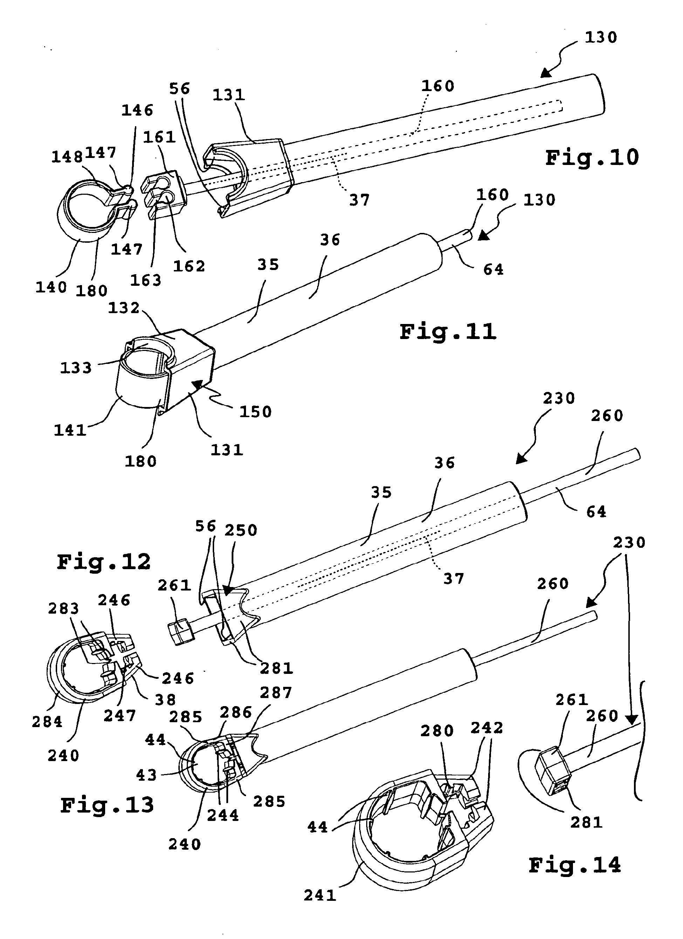

Eine in den Figuren 11 und 12 dargestellte Befestigungseinrichtung 130 sowie eine in den Figuren 12, 13 und 14 dargestellte Befestigungseinrichtung 230 haben teilweise ähnliche Komponenten wie die vorher erläuterte Befestigungseinrichtung 30. Insoweit die Komponenten gleich oder gleichartig sind, sind dieselben Bezugszeichen verwendet und werden nicht näher erläutert. Zur Verdeutlichung von Unterschieden sind die Bezugsziffern bei der Befestigungseinrichtung 130 um 100, bei der Befestigungseinrichtung 230 um 200 vergrößert. Die Befestigungseinrichtungen 130, 230 sind nur teilweise dargestellt, d.h. sie können beispielsweise mit der Klammer 31 versehen sein und werden zweckmäßigerweise mittels einer Spannmutter betätigt, vorzugsweise mit einer erfindungsgemäßen, später noch im Detail beschriebenen Spannmutter, die aus Gründen der Vereinfachung jedoch nicht dargestellt ist.

Die Befestigungseinrichtung 130 zeigt ein im Vergleich zur Befestigungseinrichtung 30 unterschiedliches Anbindungskonzept zur Verbindung zwischen Schelle und Zuganker. Eine Schelle 140 der Befestigungseinrichtung 130 hat an ihrem Ringkörper 141 Ringkörper-Spannenden 142, an denen Zuganker-Halterungen 146 vorgesehen sind. Die Zuganker-Halterungen 146 sind im Unterschied zum vorigen Ausführungsbeispiel nicht als Ausnehmungen oder Aufnahmen ausgestaltet oder weisen ebensolche auf, sondern haben Zugvorsprünge. Die Zugvorsprünge 147 dienen zum Eingriff in Zugaufnahmen 162 eines Zugankers 160. Die Zugaufnahmen 162 sind an einem Zugwiderlagerelement 161 des Zugankers 160 angeordnet. Der Ringkörper 141 weist eine gewisse Flexibilität auf, so dass er an den Trägerkörper 23 quasi angeclipst werden kann. Er kann aufgeweitet werden, bis er den Trägerkörper 23 oder den Bügel 21 umgreift und in seinem ringförmigen Innenquerschnitt 43 aufnimmt.

Die beiden Ringkörper-Spannenden 42 stehen dann, so wie in Figur 10 dargestellt, etwa radial bzw. parallel zu einer vom Zentrum des Innenquerschnitts 43 verlaufenden Radiallinie parallel ab. Sodann können die im Querschnitt beispielsweise runden, vorzugsweise kreisrunden, Zugvorsprünge 147 in der Art von Steckvorsprüngen in die sie formschlüssig aufnehmenden Zugaufnahmen 162 eingesteckt werden. Die Zugaufnahmen 162 haben eine schlüssellochartige Gestalt, wobei ein im Wesentlichen runder, die Zugvorsprünge 147 aufnehmender Abschnitt der Zugaufnahmen 162 einen größeren Innenquerschnitt aufweist, vorliegend passend zu den Zugvorsprüngen 147 einen runden Innenquerschnitt, als an einer Seite freie Öffnungen 163, die zur Aufnahme vorstehender Abschnitte 148 der Ringkörper-Spannenden 142 vorgesehen sind.

Das Zugwiderlagerelement 161 ist blockartig ausgestaltet, beispielsweise im Wesentlichen quaderförmig, und ist am Ende des Zugankerstabes 64 des Zugankers 160 angeordnet.

Auch bei der Befestigungseinrichtung 130 ist quasi das "Zentralverspannungskonzept" der Befestigungseinrichtung 30 realisiert, wobei dies selbstverständlich so zu verstehen ist, dass die Spannbewegungsbahn 37 zwar in Richtung des Innenquerschnitts 43 der Ringkörper 41, 141 und 241 gerichtet ist, dort allerdings nicht unbedingt zentrisch sein muss, sondern auch tangential zum Zentrum verlaufen kann. Allerdings wirkt die Spannkraft in Richtung des Innenquerschnitts und nicht tangential an diesem vorbei, wie bei konventionellen Spannschellen der Fall.

Am vorderen, dem der Schelle 140 zugewandten Ende des Distanzkörpers 35 ist separat von oder einstückig mit dem Distanzkörper 35 (der auch wegfallen kann) ein Spannkörper 150 vorgesehen, der im Unterschied zum Spannkörper 50 nicht auf den Bereich der Ringkörper-Spannenden 42 wirkt, sondern den Umfang des Ringkörpers 141 im Sinne eines Spannens in Richtung des Innenquerschnitts 43 beaufschlagt. Der Spannkörper 150 ist als eine Art Spanngehäuse ausgestaltet. Innenseiten von Seitenwänden 131 des Spannkörpers 150 verlaufen schräg zur Spannbewegungsbahn 37, so dass sie bei einer Zugbewegung des Zugankers 160 in den Innenraum des Spannkörpers 150 / Spanngehäuses hinein an den Umfangs-Außenseiten 180 des Ringkörpers 140 entlang gleiten und diesen im Sinne eines Verengens des Innenquerschnitts 43 nach insbesondere radial innen beaufschlagen.

Eine zusätzliche Spannwirkung oder Haltewirkung entfaltet eine Anpresskontur 133 des Spannkörpers 150. Die Anpresskontur 133 ist vorteilhaft an einer Stirnseite einer Vorderwand 132 vorgesehen. Zweckmäßigerweise sind zwei Anpresskonturen 133 an einander entgegengesetzten Vorderwänden 132 des Spannkörpers 150 vorgesehen. Die Anpresskonturen 133 dienen zum Anpressen oder Andrücken des Spannkörpers 50 gegen den Trägerkörper 23. Bei einem beispielsweise im Außenquerschnitt runden Trägerkörper 23, z.B. einem Rohr, haben die Anpresskonturen 133 einen entsprechend runden, beispielsweise kreisrunden Verlauf, wobei selbstverständlich in Anpassung an andere Außenkonturen von Trägerkörpern auch andere Anpresskontur-Geometrien möglich sind.

Am Konzept der Befestigungseinrichtung 30 wird deutlich, dass speziell ausgeformte Ringkörper-Spannenden, d.h. Ringkörper-Spannenden mit Schrägflächen, nicht notwendig sind, um die Erfindung zu realisieren. Vielmehr genügt es, dass an einem Spannkörper mindestens eine Schrägfläche vorhanden ist, die beispielsweise auf eine Außenumfangswand bzw. einen Grundkörper oder einen Ringabschnitt einer Schelle einer erfindungsgemäßen Befestigungseinrichtung wirkt. Weiterhin wird deutlich, dass durch ein einfaches Steckkonzept (Steckaufnahme(n) und Steckvorsprung oder Steckvorsprünge) ein einfaches Lösen und Anbringen eines Zugankers an der Schelle möglich ist, so dass die Schelle ohne Weiteres auch am Trägerkörper verbleiben kann. Mithin könnte also beispielsweise der Ringkörper 41 oder 141 ringförmig geschlossen seine, d.h. dass beispielsweise zwischen den beiden Ringkörper-Spannenden 42, 142 eine Verbindung, vorzugsweise mit einem schiebe- und/oder schwenkbeweglichen und/oder elastischen Verbindungselement, vorhanden ist.

Dieses Konzept ist bei der Befestigungseinrichtung 230 weiter verfeinert. Die Befestigungseinrichtung 230 ist in Bezug auf das Verbindungskonzept zwischen ihrem Zuganker 260 und ihrer Schelle 240 ähnlich aufgebaut wie die Befestigungseinrichtung 30. Mithin ist vom am Zuganker 260 ein Zugwiderlagerelement 62 mit vierkantartigen Zugvorsprüngen 262 vorhanden, die in Zuganker-Aufnahmen 242 von Zuganker-Halterungen 246 an Ringkörper-Spannenden 242 eingreifen. Die Zuganker-Aufnahmen 47 sind also im Wesentlichen U-förmig.

An einander gegenüberliegenden Seiten des Zugwiderlagerelements 262 und den dieses aufnehmenden Zuganker-Aufnahmen 247 sind Konturen 280, 281 vorgesehen, beispielsweise am Boden der Zuganker-Aufnahmen 47. Diese Konturen 280, 281 können als Formschlusskonturen ausgestaltet sein, so dass die beiden Bauteile formschlüssig ineinandergreifen. Somit wird ein zusätzlicher Halt erzielt. Beispielsweise kann eine Art Rastsitz gewünscht sein, so dass die Konturen 280, 281 Rastkonturen bilden. Somit hält also die Schelle 240 am Zuganker 260 auch dann, wenn der später noch beschriebene Spannkörper 250 gelöst ist. Weiterhin ist es möglich, dass die Konturen 280, 281 Distanzkonturen bilden, die zweckmäßigerweise federnd nachgiebig sind, dass die Ringkörper-Spannenden 242 quer zur Spannbewegungsbahn 37 aufeinander zu bzw. voneinander weg beweglich sind.

Diese Beweglichkeit wird nicht durch ein Verbindungselement 282 des Ringkörpers 241 behindert, das zwischen den Ringkörper-Spannenden 242 angeordnet ist und diese, insgesamt einen Ring bildend, miteinander verbindet. Das Verbindungselement 282 ist zweckmäßigerweise als ein Filmscharnier ausgestaltet. Beispielsweise hat das Verbindungselement 282 zwei relativ zueinander beweglich gelagerte Abschnitte 283. Die Abschnitte 283 sind ihrerseits wiederum bezüglich der Ringkörper-Spannenden 242 vorzugsweise beweglich, z.B. schwenk- oder knick-beweglich.

Am Ringkörper 241 wird deutlich, dass zwar eine kreisrunde Gestalt zweckmäßig ist, jedoch nicht zwingend notwendig. Der Ringkörper 241 zwar einen im Wesentlichen kreisrunden Bogenabschnitt 284, an den sich jedoch im Wesentlichen geradlinig, quasi als etwa tangentiale Fortsetzung verlaufende Schenkelabschnitte 285 anschließen. Die Schenkelabschnitte 285 haben zueinander winkelige, beispielsweise etwa rechtwinkelige Teilabschnitte 286, 287. Vom jeweiligen Teilabschnitt 287 steht das Ringkörper-Spannende 242 vor bzw. wird dadurch gebildet. An der dem Innenquerschnitt 43 zugeordneten Innenseite des Teilabschnitts 287 steht ein verhältnismäßig langer Stützvorsprung 244 vor, so dass die Stützvorsprünge 44, 244 einen im Wesentlichen ringförmigen, jedenfalls an die Außenkontur des Trägerkörpers 23 angepassten Innenraum oder Halteraum definieren.

Ähnlich wie der Spannkörper 150 hat auch der Spannkörper 250 eine Gehäusegestalt. Mindestens eine der Seitenwände 288, vorzugsweise zwei gegenüberliegende Seitenwände 288, haben dabei einen Schrägverlauf quer zur Spannbewegungsbahn 37, so dass deren Innenseiten Schrägflächen 56 definieren.

Bevorzugt ist vorgesehen, dass sämtliche Seitenwände 288 diesen Schrägverlauf haben, so dass der Spannkörper 250 in mehreren Drehpositionen relativ zur Spannbewegungsbahn 37 seine Spannfunktion auf die Außenseiten der Ringkörper-Spannenden 42, andrücken oder anpressen kann. Diese Außenseiten sind zweckmäßigerweise auch als Schrägflächen ausgestaltet (Schrägflächen 38).

## Patentansprüche

1. Befestigungseinrichtung für einen Kraftfahrzeug-Träger (10), insbesondere einen Fahrradträger, mit einer Schelle (40, 140, 240) zur Befestigung an einem Trägerkörper (23) insbesondere des Kraftfahrzeug-Trägers (10), mit einem Spannkörper (50, 150, 250) zum Verspannen eines ersten Ringkörper-Spannendes (42, 142, 242) und eines zweiten Ringkörper-Spannendes (42, 142, 242) eines Ringkörpers (41, 141, 241) der Schelle (40, 140, 240) zueinander hin, wobei sich der Spannkörper (50, 150, 250) an einander entgegengesetzten Außenseiten der beiden Ringkörper-Spannenden (42, 142, 242) abstützt, derart, dass ein zum Eingriff oder Durchgriff des Trägerkörpers (23) vorgesehener Innenquerschnitt (43) des Ringkörpers (41, 141, 241) bei einer Verstellung des Spannkörpers (50, 150, 250) von einer Lösestellung (L) in eine Spannstellung (S) im Sinne eines Verspannens der Befestigungseinrichtung (30, 130, 230) an dem Trägerkörper (23) verändert wird, wobei der Spannkörper (50, 150, 250) entlang einer zu einem Innenquerschnitt (43) der Schelle (40, 140, 240) hin gerichteten, insbesondere linearen, Spannbewegungsbahn (37) aus der Lösestellung (L) in die Spannstellung (S) beweglich gelagert ist, wobei zwischen dem Spannkörper (50, 150, 250) und mindestens einem der Ringkörper-Spannenden (42, 142, 242) zu einer Spannkraftbeaufschlagung quer zu der Spannbewegungsbahn (37) mindestens eine Schrägfläche (38; 56) vorgesehen ist, deren Abstand von der Spannbewegungsbahn (37) in Richtung des Innenquerschnitts (43) zunimmt, wobei sie einen an einer Zuganker-Halterung (46, 146, 246) des Ringkörpers (41, 141, 241) zugfest befestigbaren Zuganker (60, 160, 260) aufweist, an dem sich der Spannkörper (50, 150, 250) in seiner Spannstellung (S) direkt oder indirekt abstützt und wobei der Zuganker (60, 160, 260) von dem Ringkörper (41, 141, 241) entfernbar ist, **dadurch gekennzeichnet, dass** die mindestens eine Zuganker-Halterung (46, 146, 246) des Ringkörpers (41, 141, 241) und ein Zugwiderlagerelement (61, 161, 261) des Zugankers (60, 160, 260) mindestens eine Zuganker-Aufnahme (47, 247) und mindestens einen Zugvorsprung (62, 162, 262) zum Eingriff in die Zuganker-Aufnahme (47, 247) aufweisen, und dass an dem mindestens einen Zugvorsprung (62, 162, 262) und der mindestens einen Zuganker-Aufnahme (47, 247) Formschlusskonturen (281, 282) zum formschlüssigen Eingriff oder Rasteingriff ineinander vorgesehen sind.

2. Befestigungseinrichtung nach Anspruch 1, **dadurch gekennzeichnet, dass** der Spannkörper (50, 150, 250) entlang einer einem Zentralbereich (39) des Innenquerschnitts (43) der Schelle (40, 140, 240) hin gerichteten Spannbewegungsbahn (37) aus der Lösestellung (L) in die Spannstellung (S) beweglich gelagert ist und/oder dass der Abstand der mindestens einen Schrägfläche (38; 56) von der Spannbewegungsbahn (37) in Richtung des Zentralbereichs (39) zunimmt.

3. Befestigungseinrichtung nach Anspruch 1 oder 2, **dadurch gekennzeichnet, dass** die mindestens eine Schrägfläche (38; 56) mindestens eine an einem der Ringkörper-Spannenden (42, 142, 242) vorgesehene Schrägfläche (38) und/oder eine an dem Spannkörper (50, 150, 250) an mindestens einer einem dem Ringkörper-Spannende (42, 142, 242) zugeordneten Spannbereich vorgesehene Schrägfläche (56) umfasst und/oder dass die mindestens eine Schrägfläche (38; 56) an einander entgegengesetzten Seiten der Ringkörper-Spannenden (42, 142, 242) und/oder einander zugewandten Seiten des Spannkörpers (50, 150, 250) angeordnete Schrägflächen (38; 56) umfasst, und/oder die mindestens eine Schrägfläche (38; 56) eine nicht selbsthemmende Neigung, insbesondere in einem Bereich von 20 bis 60 Grad, vorzugsweise etwa 30 Grad, schräg zu der Spannbewegungsbahn (37) aufweist.

4. Befestigungseinrichtung nach einem der vorhergehenden Ansprüche, **dadurch gekennzeichnet, dass** mindestens eines der Ringkörper-Spannenden (42, 142, 242) zumindest einen Halterungsteil der Zuganker-Halterung (46, 146, 246) aufweist.

5. Befestigungseinrichtung nach einem der vorhergehenden Ansprüche, **dadurch gekennzeichnet, dass** die mindestens eine Zuganker-Aufnahme (47, 247) eine Steckaufnahme und/oder Schraubaufnahme und der mindestens einen Zugvorsprung (62, 162, 262) einen Steckvorsprung und/oder einen Schraubvorsprung umfasst.

6. Befestigungseinrichtung nach einem der vorhergehenden Ansprüche, **dadurch gekennzeichnet, dass** zwischen dem mindestens einen Zugvorsprung (62, 162, 262) und der mindestens einen Zuganker-Aufnahme (47, 247) in der Lösestellung (L) des Spannkörpers (50, 150, 250) ein Spiel (68) vorhanden ist, das in der Spannstellung (S) verkleinert ist und/oder dass die mindestens eine Schrägfläche (38; 56) im Bereich der mindestens einen Zuganker-Aufnahme (47, 247) angeordnet ist und in der Spannstellung (S) in Richtung des mindestens einen Zugvorsprungs (62, 162, 262) kraftbeaufschlagt ist und/oder dass die Formschlusskonturen (281, 282) an dem mindestens einen Zugvorsprung (62, 162, 262) und der mindestens einen Zuganker-Aufnahme (47, 247) quer zur Zugrichtung oder zur Spannbewegungsbahn (37) zum formschlüssigen Eingriff oder Rasteingriff ineinander vorgesehen sind.

7. Befestigungseinrichtung nach einem der vorhergehenden Ansprüche, **dadurch gekennzeichnet, dass** die Ringkörper-Spannenden (42, 142, 242) einander zugewandt offene Zuganker-Aufnahmen (47, 247) aufweisen, in die an einander entgegengesetzt an dem Zugwiderlagerelement (61, 161, 261) des Zugankers (60, 160, 260) angeordnete Zugvorsprünge (62, 162, 262) eingreifen.

8. Befestigungseinrichtung nach einem der vorhergehenden Ansprüche, **dadurch gekennzeichnet, dass** der Zuganker (60, 160, 260) verdrehgesichert an dem Ringkörper (41, 141, 241) gehaltert ist und/oder dass der Zuganker (60, 160, 260) den Spannkörper (50, 150, 250) durchdringt und/oder dass der Spannkörper (50, 150, 250) an dem Zuganker (60, 160, 260) geführt ist und/oder eine Längsachse des Zugankers (60, 160, 260) die Spannbewegungsbahn (37) definiert.

9. Befestigungseinrichtung nach einem der vorhergehenden Ansprüche, **dadurch gekennzeichnet, dass** der Zuganker (60, 160, 260) zumindest abschnittsweise biegesteif, insbesondere stabförmig, und/oder zumindest abschnittsweise flexibel ist und/oder dass der Zuganker (60, 160, 260) einen insbesondere an einem Gewindestab angeordneten Gewindeabschnitt (66) aufweist, auf den zum Verstellen des Spannkörpers (50, 150, 250) eine Spannmutter (71) aufschraubbar ist, an der sich der Spannkörper (50, 150, 250) direkt oder indirekt abstützt.

10. Befestigungseinrichtung nach einem der vorhergehenden Ansprüche, **dadurch gekennzeichnet, dass** ein Innenumfang (45) und/oder ein Außenumfang des Ringkörpers (41, 141, 241) im Wesentlichen kreisringförmig ist und/oder der Ringkörper (41, 141, 241) einen geschlossenen Ring definiert und/oder der Ringkörper (41, 141, 241) einstückig ist und/oder dass die Ringkörper-Spannenden (42, 142, 242) durch ein Verbindungselement (282), insbesondere ein Filmscharnier, miteinander verbunden sind.

11. Befestigungseinrichtung nach einem der vorhergehenden Ansprüche, **dadurch gekennzeichnet, dass** der Spannkörper (50, 150, 250) eine hülsenartige oder ringartige oder teilringartige Gestalt aufweist und/oder der Ringkörper (41, 141, 241) einteilig ist oder aus mindestens zwei miteinander verbundenen Ringsegmenten besteht.

12. Befestigungseinrichtung nach einem der vorhergehenden Ansprüche, **dadurch gekennzeichnet, dass** sie mindestens eine, insbesondere durch den Zuganker (60, 160, 260) mit der Schelle (40, 140, 240) verbundene, Klammer (31) zum klammerartigen Halten eines Gegenstandes, insbesondere eines Fahrrades, aufweist.

13. Befestigungseinrichtung nach einem der vorhergehenden Ansprüche, **dadurch gekennzeichnet, dass** sie eine insbesondere mit einem Gewindeabschnitt (66) des Zugankers (60, 160, 260) kämmende Spannmutter (71) zum Verstellen des Spannkörpers (50, 150, 250) in seine Spannstellung (S) aufweist.

14. Befestigungseinrichtung nach Anspruch 13, **dadurch gekennzeichnet, dass** die Spannmutter (71) einen Bestandteil einer Spannmutteranordnung (70) bildet und mittels eines mit der Spannmutter (71) drehfest verbindbaren oder verbundenen Handgriffkörpers (80) drehbetätigbar ist, um die Spannmutter (71) entlang des Gewindeabschnitts (66) axial zu verstellen die Spannmutter (71) mindestens zwei relativ zueinander beweglich gelagerte Spannmutterteile (72) aufweist, die mittels eines Betätigungskörpers (90) zwischen einer Eingriffstellung (E), bei der Innengewinde (74) der Spannmutterteile (72) im Eingriff mit dem Gewindeabschnitt (66) des Gewindekörpers (67) sind, und einer Freigabestellung (F), bei der die Innengewinde (74) der Spannmutterteile (72) außer im Eingriff mit dem Gewindeabschnitt (66) des Gewindekörpers (67) sind und die Spannmutter (71) entlang des Gewindeabschnitt (66) verschieblich ist, verstellbar sind.

15. Kraftfahrzeug-Träger (10), insbesondere Fahrradträger, mit mindestens einer Befestigungseinrichtung (30, 130, 230) nach einem der vorhergehenden Ansprüche.

## Claims

1. Fastening device for a motor vehicle rack (10), in particular a cycle rack, with a clamp (40, 140, 240) for fastening to a rack body (23), in particular of the motor vehicle rack (10), with a clamping body (50, 150, 250) for clamping a first annular body clamping end (42, 142, 242) and a second annular body clamping end (42, 142, 242) of an annular body (41, 141, 241) of the clamp (40, 140, 240) to one another, wherein the clamping body (50, 150, 250) rests on opposite outer sides of the two annular body clamping ends (42, 142, 242) in such a way that an inside cross-section (43) of the annular body (41, 141, 241) provided for engaging with or reaching through the rack body (23) is shifted in an adjustment of the clamping body (50, 150, 250) from a release position (L) into a clamping position (S) for the purpose of clamping the fastening device (30, 130, 230) to the rack body (23), wherein the clamping body (50, 150, 250) is movably mounted along a clamping movement path (37) from the release position (L) to the clamping position (S), in particular linear, oriented towards an inside cross-section (43) of the clamp (40, 140, 240), wherein there is provided between the clamping body (50, 150, 250) and at least one of the annular body clamping ends (42, 142, 242), for a clamping force application at right-angles to the clamping movement path (37), at least one inclined surface (38; 56) with a clearance from the clamping movement path (37) which increases towards the inside cross-section (43), wherein it has on a tie rod mounting (46, 146, 246) of the annular body (41, 141, 241) a tie rod (60, 160, 260) which may be fastened so as to be tension-resistant and on which the clamping body (50, 150, 250) in its clamping position (S) rests directly or indirectly, and wherein the tie rod (60, 160, 260) is removable from the annular body (41, 141, 241), **characterised in that** the tie rod mounting or mountings (46, 146, 246) of the annular body (41, 141, 241) and a tension thrust bearing element (61, 161, 261) of the tie rod (60, 160, 260) have at least one tie rod holder (47, 247) and at least one tension projection (62, 162, 262) for engaging in the tie rod holder (47, 247), and that interlocking contours (281, 282) for form-fitting engagement or latching engagement in one another are provided on the tension projection or projections (62, 162, 262) and the tie rod holder or holders (47, 247).

2. Fastening device according to claim 1, **characterised in that** the clamping body (50, 150, 250) is movably mounted along a clamping movement path (37) from the release position (L) to the clamping position (S) oriented towards a central area (39)of the inside cross-section (43) of the clamp (40, 140, 240), and/or that the clearance of the inclined surface or surfaces (38; 56) from the clamping movement path (37) increases towards the central area (39).

3. Fastening device according to claim 1 or 2, **characterised in that** the inclined surface or surfaces (38; 56) include at least one inclined surface (38) provided at one of the annular body clamping ends (42, 142, 242) and/or one inclined surface (56) provided on the clamping body (50, 150, 250) on at least one clamping area assigned to one of the annular body clamping ends (42, 142, 242), and/or that the inclined surface or surfaces (38; 56) include inclined surfaces (38; 56) located on opposite sides of the annular body camping ends (42, 142, 242) and/or on facing sides of the clamping body (50, 150, 250), and/or the inclined surface or surfaces (38; 56) have a non-jamming slope, in particular in a range of 20 to 60 degrees, preferably around 30 degrees, at an angle to the clamping movement path (37).

4. Fastening device according to any of the preceding claims, **characterised in that** at least one of the annular body clamping ends (42, 142, 242) has at least one mounting part of the tie rod mounting (46, 146, 246).

5. Fastening device according to any of the preceding claims, **characterised in that** the tie rod holder or holders (47, 247) has or have a plug-in socket and/or screw socket, and the tension projection or projections (62, 162, 262) has or have a plug-in projection and/or a screw projection.

6. Fastening device according to any of the preceding claims, **characterised in that** between the tension projection or projections (62, 162, 262) and the tie rod holder or holders (47, 247) in the release position (L) of the clamping body (50, 150, 250) there is play which is reduced in the clamping position (S), and/or that the inclined surface or surfaces (38; 56) is or are located in the area of the tie rod holder or holders(47, 247) and in the clamping position (S) is or are pressure-loaded towards the tension projection or projections (62, 162, 262) and/or that the interlocking contours (281, 282) are provided on the tension projection or projections (62, 162, 262) and the tie rod holder or holders (47, 247) at right-angles to the tension direction or the clamping movement path (37) for form-fitting engagement or latching engagement.

7. Fastening device according to any of the preceding claims, **characterised in that** the annular body clamping ends (42, 142, 242) have facing open tie rod holders (47, 247) in which tension projections (62, 162, 262) arranged opposite one another engage in the tension thrust bearing element (61, 161, 261) of the tie rod (60, 160, 260).

8. Fastening device according to any of the preceding claims, **characterised in that** the tie rod (60, 160, 260) is held non-rotatably to the annular body (41, 141, 241) and/or that the tie rod (60, 160, 260) penetrates the clamping body (50, 150, 250) and/or that the clamping body (50, 150, 250) is guided on the tie rod (60, 160, 260) and/or a longitudinal axis of the tie rod (60, 160, 260) defines the clamping movement path (37).

9. Fastening device according to any of the preceding claims, **characterised in that** the tie rod (60, 160, 260) is at least in part flexurally stiff, in particular rod-shaped, and/or at least in part flexible, and/or that the tie rod (60, 160, 260) has a threaded section (66), in particular provided on a threaded rod, on which a clamping nut (71) may be screwed to adjust the clamping body (50, 150, 250) and on which the clamping body (50, 150, 250) rests directly or indirectly.

10. Fastening device according to any of the preceding claims, **characterised in that** an inner periphery (45) and/or an outer periphery of the annular body (41, 141, 241) are substantially circular-arc-shaped and/or the annular body (41, 141, 241) defines a closed ring and/or the annular body (41, 141, 241) is in one piece, and/or that the annular body clamping ends (42, 142, 242) are joined to one another by a connecting element (282), in particular a film hinge.

11. Fastening device according to any of the preceding claims, **characterised in that** the clamping body (50, 150, 250) has a sleeve-like or ring-like or part-ring-like shape and/or the annular body (41, 141, 241) is in one piece or comprised of at least two ring segments joined together.

12. Fastening device according to any of the preceding claims, **characterised in that** it has at least one clip (31), in particular connected by the tie rod (60, 160, 260) to the clamp (40, 140, 240), for clip-like holding of an object, in particular a cycle.

13. Fastening device according to any of the preceding claims, **characterised in that** it has a clamping nut (71), in particular meshing with a threaded section (66) of the tie rod (60, 160, 260), for shifting the clamping body (50, 150, 250) into its clamping position (S).

14. Fastening device according to claim 13, **characterised in that** the clamping nut (71) forms part of a clamping nut assembly (70) and may be rotated by means of a handle body (80) connected or connectable to the clamping nut (71), and in order to move the clamping nut (71) axially along the threaded section (66) the clamping nut (71) has at least two clamping nut sections (72) mounted movably relative to one another, which may be shifted by means of an actuating body (90) between an engaged position (E) in which the internal threads (74) of the clamping nut sections (72) mesh with the threaded section (66) of the threaded body (67), and a release position (F) in which the internal threads (74) of the clamping nut sections (72) do not mesh with the threaded section (66) of the threaded body (67) and the clamping nut (71) may be moved along the threaded section (66).

15. Motor vehicle rack (10), in particular a cycle rack, with at least one fastening device (30, 130, 230) according to any of the preceding claims.

## Revendications

1. Dispositif de fixation pour un support de véhicule automobile (10), en particulier un porte-vélo, avec un étrier (40, 140, 240) pour la fixation sur un corps porteur (23) en particulier du support de véhicule automobile (10), avec un corps de serrage (50, 150, 250) pour le serrage d'une première extrémité de serrage (42, 142, 242) et d'une seconde extrémité de serrage (42, 142, 242) d'un corps annulaire (41, 141, 241) de l'étrier (40, 140, 240) l'une vers l'autre, le corps de serrage (50, 150, 250) s'appuyant contre des côtés extérieurs opposés des deux extrémités de serrage de corps annulaire (42, 142, 242) de telle manière qu'une section transversale intérieure (43) prévue pour l'engagement ou le passage du corps porteur (23) du corps annulaire (41, 141, 241) soit modifiée lors d'un déplacement du corps de serrage (50, 150, 250) d'une position de desserrage (L) à une position de serrage (S) au sens d'un serrage du dispositif de fixation (30, 130, 230) sur le corps porteur (23), le corps de serrage (50, 150, 250) étant logé de manière mobile le long d'une voie de déplacement de serrage (37) dirigée vers une section transversale intérieure (43) de l'étrier (40, 140, 240), en particulier linéaire, de la position de desserrage (L) à la position de serrage (S), au moins une surface oblique (38 ; 36) étant prévue entre le corps de serrage (50, 150, 250) et au moins l'une des extrémités de serrage de corps annulaire (42, 142, 242) pour une sollicitation de force de serrage transversalement à la voie de déplacement de serrage (37), dont la distance par rapport à la voie de déplacement de serrage (37) augmente en direction de la section transversale intérieure (43), celui-ci présentant un tirant d'ancrage (60, 160, 260) pouvant être fixé de manière résistante à la traction sur un support de tirant d'ancrage (46, 146, 246) du corps annulaire (41, 141, 241), sur lequel le corps de serrage (50, 150, 250) s'appuie directement ou indirectement dans sa position de serrage (S) et le tirant d'ancrage (60, 160, 260) pouvant être retiré du corps annulaire (41, 141, 241), **caractérisé en ce que** l'au moins un support de tirant d'ancrage (46, 146, 246) du corps annulaire (41, 141, 241) et un élément de contre-appui de traction (61, 161, 261) du tirant d'ancrage (60, 160, 260) présentent au moins un logement de tirant d'ancrage (47, 247) et au moins une saillie de traction (62, 162, 262) pour l'engagement dans le logement de tirant d'ancrage (47, 247), et **en ce que** des contours à complémentarité de formes (281, 282) sont prévus pour l'engagement à complémentarité de formes ou l'engagement par encliquetage l'un dans l'autre sur l'au moins une saillie de traction (62, 162, 262) et l'au moins un logement de tirant d'ancrage (47, 247).

2. Dispositif de fixation selon la revendication 1, **caractérisé en ce que** le corps de serrage (50, 150, 250) est logé de manière mobile le long d'une voie de déplacement de serrage (37) dirigée vers une zone centrale (39) de la section transversale intérieure (43) de l'étrier (40, 140, 240) de la position de desserrage (L) à la position de serrage (S) et/ou **en ce que** la distance entre l'au moins une surface oblique (38 ; 56) et la voie de déplacement de serrage (37) augmente en direction de la zone centrale (39).

3. Dispositif de fixation selon la revendication 1 ou 2, **caractérisé en ce que** l'au moins une surface oblique (38 ; 56) comporte au moins une surface oblique (38) prévue sur l'une des extrémités de serrage du corps annulaire (42, 142, 242) et/ou une surface oblique (56) prévue sur le corps de serrage (50, 150, 250) sur au moins une zone de serrage associée à une extrémité de serrage de corps annulaire (42, 142, 242) et/ou **en ce que** l'au moins une surface oblique (38 ; 56) comporte des surfaces obliques (38 ; 56) disposées sur des côtés opposés des extrémités de serrage de corps annulaire (42, 142, 242) et/ou des côtés tournés l'un vers l'autre du corps de serrage (50, 150, 250), et/ou **en ce que** l'au moins une surface oblique (38 ; 56) présente une inclinaison non autobloquante, en particulier dans une zone comprise entre 20 et 60 degrés, de préférence d'environ 30 degrés, en biais par rapport à la voie de déplacement de serrage (37).

4. Dispositif de fixation selon l'une quelconque des revendications précédentes, **caractérisé en ce qu'**au moins l'une des extrémités de serrage de corps annulaire (42, 142, 242) présente au moins une partie du support de tirant d'ancrage (46, 146, 246).

5. Dispositif de fixation selon l'une quelconque des revendications précédentes, **caractérisé en ce que** l'au moins un logement de tirant d'ancrage (47, 247) comporte un logement à emboîter et/ou logement à visser et l'au moins une saillie de traction (62, 162, 262) une saillie à emboîter et/ou à visser.

6. Dispositif de fixation selon l'une quelconque des revendications précédentes, **caractérisé en ce qu'**un jeu (68) est présent entre l'au moins une saillie de traction (62, 162, 262) et l'au moins un logement de tirant d'ancrage (47, 247) dans la position de desserrage (L) du corps de serrage (50, 150, 250), lequel est réduit dans la position de serrage (S) et/ou **en ce que** l'au moins une surface oblique (38 ; 56) est disposée dans la zone de l'au moins un logement de tirant d'ancrage (47, 247) et est sollicitée à force dans la position de serrage (S) en direction de l'au moins une saillie de traction (62, 162, 262) et/ou **en ce que** les contours à complémentarité de formes (281, 282) sont prévus sur l'au moins une saillie de traction (62, 162, 262) et l'au moins un logement de tirant d'ancrage (47, 247) transversalement au sens de traction ou à la voie de déplacement de serrage (37) pour l'engagement à complémentarité de formes ou par encliquetage.

7. Dispositif de fixation selon l'une quelconque des revendications précédentes, **caractérisé en ce que** les extrémités de serrage de corps annulaire (42, 142, 242) présentent des logements de tirant d'ancrage ouverts tournés les uns vers les autres (47, 247), dans lesquels s'engagent des saillies de traction (62, 162, 262) disposées à l'opposé sur l'élément de contre-appui de traction (61, 161, 261) du tirant d'ancrage (60, 160, 260).

8. Dispositif de fixation selon l'une quelconque des revendications précédentes, **caractérisé en ce que** le tirant d'ancrage (60, 160, 260) est fixé de manière bloquée en rotation sur le corps annulaire (41, 141, 241) et/ou **en ce que** le tirant d'ancrage (60, 160, 260) pénètre le corps de serrage (50, 150, 250) et/ou **en ce que** le corps de serrage (50, 150, 250) est guidé sur le tirant d'ancrage (60, 160, 260) et/ou un axe longitudinal du tirant d'ancrage (60, 160, 260) définit la voie de déplacement de serrage (37).

9. Dispositif de fixation selon l'une quelconque des revendications précédentes, **caractérisé en ce que** le tirant d'ancrage (60, 160, 260) est au moins par sections rigide à la flexion, en particulier en forme de barre et/ou au moins par sections flexible et/ou **en ce que** le tirant d'ancrage (60, 160, 260) présente une section filetée (66) disposée en particulier sur une barre filetée, sur laquelle un écrou de serrage (71) peut être vissé pour le déplacement du corps de serrage (50, 150, 250), contre lequel le corps de serrage (50, 150, 250) s'appuie directement ou indirectement.

10. Dispositif de fixation selon l'une quelconque des revendications précédentes, **caractérisé en ce qu'**une périphérie intérieure (45) et/ou une périphérie extérieure du corps annulaire (41, 141, 241) est sensiblement en forme d'anneau de cercle et/ou le corps annulaire (41, 141, 241) définit un anneau fermé et/ou le corps annulaire (41, 141, 241) est d'un seul tenant et/ou en ce que les extrémités de serrage de corps annulaire (42, 142, 242) sont reliées entre elles par un élément de liaison (282), en particulier une charnière à film.

11. Dispositif de fixation selon l'une quelconque des revendications précédentes, **caractérisé en ce que** le corps de serrage (50, 150, 250) présente une forme de type douille ou anneau ou anneau partiel et/ou le corps angulaire (41, 141, 241) est d'un seul tenant ou se compose d'au moins deux segments annulaires reliés entre eux.

12. Dispositif de fixation selon l'une quelconque des revendications précédentes, **caractérisé en ce qu'**il présente au moins une bride (31) reliée en particulier par le tirant d'ancrage (60, 160, 260) à l'étrier (40, 140, 240) pour le maintien de type fixation par bride d'un objet, en particulier d'un vélo.

13. Dispositif de fixation selon l'une quelconque des revendications précédentes, **caractérisé en ce qu'**il présente un écrou de serrage (71) s'engrenant en particulier avec une section filetée (66) du tirant d'ancrage (60, 160, 260) pour le déplacement du corps de serrage (50, 150, 250) dans sa position de serrage (S).

14. Dispositif de fixation selon la revendication 13, **caractérisé en ce que** l'écrou de serrage (71) forme un élément d'un ensemble d'écrou de serrage (70) et peut être actionné de manière rotative à l'aide d'un corps de manette (80) relié ou pouvant être relié de manière solidaire en rotation à l'écrou de serrage (71) afin de déplacer axialement l'écrou de serrage (71) le long de la section filetée (66), l'écrou de serrage (71) présente au moins deux parties d'écrou de serrage (72) logées de manière mobile l'une par rapport à l'autre qui peuvent être déplacées à l'aide d'un corps d'actionnement (90) entre une position d'engagement (E), dans laquelle des filets intérieurs (74) des parties d'écrou de serrage (72) sont en engagement avec la section filetée (66) du corps fileté (67), et une position de libération (F), dans laquelle les filets intérieurs (74) des parties d'écrou de serrage (72) sont désengagés de la section filetée (66) du corps fileté (67) et l'écrou de serrage (71) est mobile le long de la section filetée (66).

15. Support de véhicule automobile (10), en particulier porte-vélo, avec au moins un dispositif de fixation (30, 130, 230) selon l'une quelconque des revendications précédentes.
